(19) Europäisches Patentamt
European Patent Office
Office européen des brevets

(11) EP 4 269 450 A1

(12) EUROPEAN PATENT APPLICATION
published in accordance with Art. 153(4) EPC

(43) Date of publication:
**01.11.2023 Bulletin 2023/44**

(21) Application number: **21910777.8**

(22) Date of filing: **21.12.2021**

(51) International Patent Classification (IPC):
***C08F 4/654*** *(2006.01)* ***C08F 10/00*** *(2006.01)*
***C08F 10/06*** *(2006.01)*

(52) Cooperative Patent Classification (CPC):
**C08F 4/654; C08F 10/00; C08F 10/06;** Y02P 20/52

(86) International application number:
**PCT/JP2021/047302**

(87) International publication number:
**WO 2022/138634 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 JP 2020211715**

(71) Applicant: **Mitsui Chemicals, Inc.**
**Tokyo 104-0028 (JP)**

(72) Inventors:
- **KIMURA Takashi**
  **Kuga-gun, Yamaguchi 740-0061 (JP)**
- **ISOGAI Makoto**
  **Kuga-gun, Yamaguchi 740-0061 (JP)**
- **NAKAYAMA Yasushi**
  **Kuga-gun, Yamaguchi 740-0061 (JP)**
- **MICHIUE Kenji**
  **Kuga-gun, Yamaguchi 740-0061 (JP)**
- **JINNAI Takashi**
  **Kuga-gun, Yamaguchi 740-0061 (JP)**
- **YAMADA Wataru**
  **Sodegaura-shi, Chiba 299-0265 (JP)**
- **TAKANO Shotaro**
  **Sodegaura-shi, Chiba 299-0265 (JP)**
- **TERAO Hiroshi**
  **Sodegaura-shi, Chiba 299-0265 (JP)**
- **YANO Takaaki**
  **Sodegaura-shi, Chiba 299-0265 (JP)**
- **TOTANI Yoshiyuki**
  **Sodegaura-shi, Chiba 299-0265 (JP)**
- **MOORTHI Sunil Krzysztof**
  **Sodegaura-shi, Chiba 299-0265 (JP)**
- **NAKANO Takashi**
  **Sodegaura-shi, Chiba 299-0265 (JP)**

(74) Representative: **J A Kemp LLP**
**80 Turnmill Street**
**London EC1M 5QU (GB)**

# (54) SOLID TITANIUM CATALYST COMPONENT, OLEFIN POLYMERIZATION CATALYST, OLEFIN POLYMERIZATION METHOD, AND PROPYLENE POLYMER

(57) [Problem] To provide a solid titanium catalyst component, a catalyst for olefin polymerization, and an olefin polymerization method that enable an olefin polymer having a higher stereoregularity and a better molecular weight distribution than conventional polymers to be produced in a highly active manner. Additionally, to provide a propylene polymer having physical properties different from those of conventional propylene polymers.

[Solution] A solid titanium catalyst component (I) for olefin polymer production contains titanium, magnesium, halogen, and a cyclic multiple-ester-group-containing compound (a) represented by the following formula (1). Preferably, a propylene polymer that is obtained by the olefin polymerization method and has specific thermal properties as determined primarily by differential scanning calorimetry (DSC).

EP 4 269 450 A1

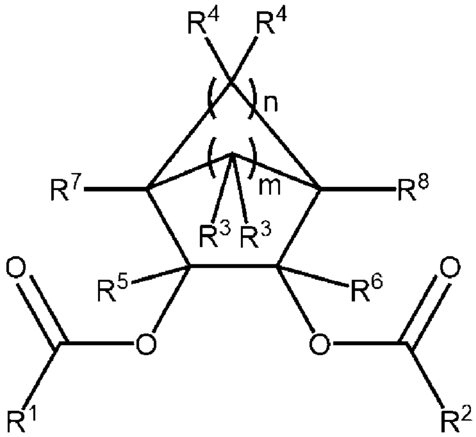

(1)

[Fig. 1]

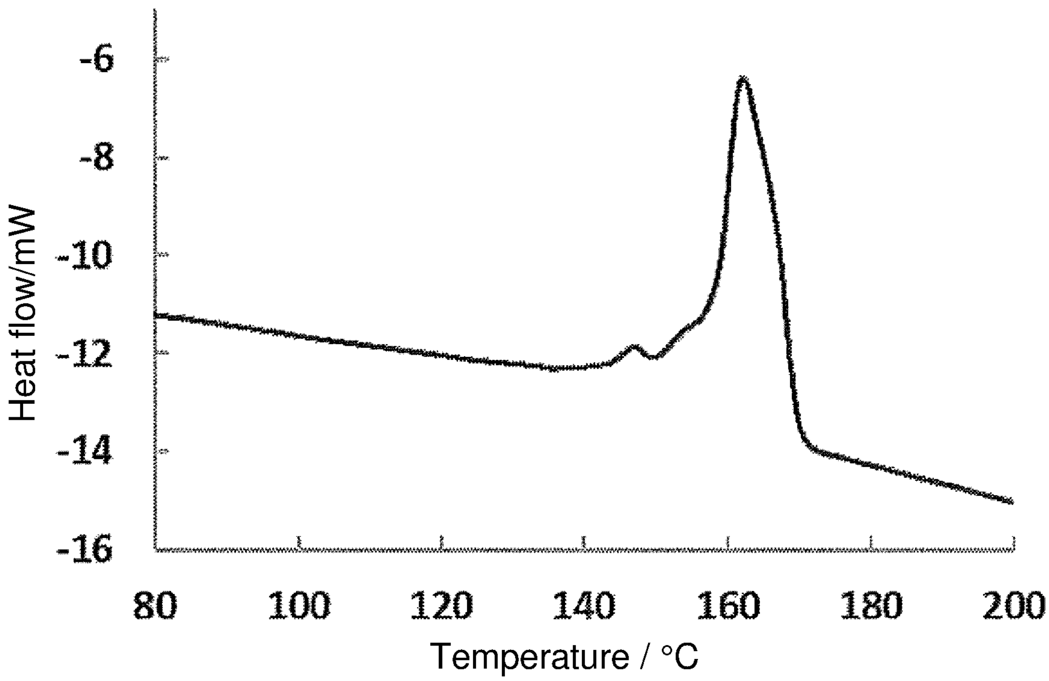


Figure DSC curve (during second heating) of Example 2-1

## Description

### Technical Field

The present invention relates to a solid titanium catalyst component, a catalyst for olefin polymerization containing the solid titanium catalyst component, an olefin polymerization method involving the catalyst for olefin polymerization, and a propylene polymer.

### Background Art

To date, known catalysts that are used to produce an olefin polymer such as an ethylene homopolymer, an α-olefin homopolymer or an ethylene/α-olefin copolymer include catalysts containing a titanium compound supported on an activated magnesium halide. Hereinafter, "homopolymerization" and "copolymerization" may be collectively referred to as "polymerization".

For example, catalysts containing titanium tetrachloride or titanium trichloride called Ziegler-Natta catalysts, and catalysts containing an organometallic compound and a solid titanium catalyst component composed of magnesium, titanium, halogen, and an electron donor are widely known as such catalysts for olefin polymerization.

The latter catalysts show high activity in the polymerization of α-olefins such as ethylene, propylene, and 1-butene. The resulting α-olefin polymers may have high stereoregularity.

It is reported that excellent polymerization activity and stereospecificity are demonstrated when, among the above catalysts, a catalyst composed of a solid titanium catalyst component carrying an electron donor selected from carboxylic acid esters typically represented by phthalic acid esters, an aluminum-alkyl compound as a cocatalyst component, and a silicon compound having at least one Si-OR (wherein R is a hydrocarbon group) is used in particular (e.g., Patent Literature 1). In addition to phthalic acid esters, a large number of electron donors such as polyether compounds are being researched.

Concerning the research involving an ester compound as an electron donor, a catalyst containing a carboxylic acid ester having two or more ester groups (e.g., Patent Literature 2) is also disclosed. The present applicant also reported that an ester compound having a specific cyclic structure provides, in a highly active manner, a polyolefin having a broad molecular weight distribution (Patent Literature 3).

A catalyst having a substituted succinic acid ester as an electron donor is reported as a catalyst that provides a polyolefin having a broad molecular weight distribution. The present applicant also reported a catalyst containing a polycarboxylic acid ester having a specific cyclic structure (Patent Literature 4).

### Citation List

### Patent Literature

Patent Literature 1: JP57-63310A
Patent Literature 2: JP2005-517746A
Patent Literature 3: WO2008/010459
Patent Literature 4: WO2006/077945

## Summary of Invention

### Technical Problem

Polypropylene (a propylene polymer) representing a polymer of an olefin having 3 or more carbon atoms is known to have a potential to show heat resistance and rigidity comparable to general-purpose engineering plastics while having a hydrocarbon structure. Polyolefin, which is a hydrocarbon structure, is a material entailing relatively low environmental burdens by barely generating toxic gas during combustive disposal or thermal recycle (a recycling method for recovering the thermal energy of combustion as, e.g., electric power).

It is also known that the heat resistance of the propylene polymer is greatly dependent on the stereoregularity thereof, and that the rigidity is affected by not only the stereoregularity but also the molecular weight distribution. While techniques have been developed that control stereoregularity to a considerable degree, it is expected with recent advancement of molding technology that polymers having higher stereoregularity may exhibit unexpected physical properties. Simultaneously having a broader molecular weight distribution may further improve the physical-property balance

as well. On the other hand, from the viewpoint of environmental protection and economy, development of catalysts showing higher activity is required.

Accordingly, an object of the present invention is to provide a solid titanium catalyst component, a catalyst for olefin polymerization, and an olefin polymerization method that enable an olefin polymer having a higher stereoregularity and a better molecular weight distribution than conventional polymers to be produced in a highly active manner. Another object of the present invention is to provide a propylene polymer having physical properties different from those of conventional propylene polymers.

**Solution to Problem**

As a result of diligent research, the present inventors have found that a solid titanium catalyst component containing a polyvalent ester compound having a specific alicyclic structure enables a polymer having a broad molecular weight distribution and an extremely high stereoregularity to be produced in a highly active manner, and have completed the present invention. The present invention relates to the following [1] to [13] for example.

[1] A solid titanium catalyst component (I) comprising titanium, magnesium, halogen, and a cyclic multiple-ester-group-containing compound (a) represented by the following formula (1):

[Formula 1]

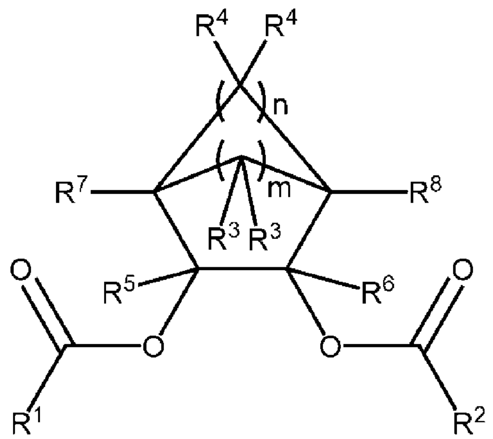

(1)

wherein m and n are each independently an integer of 1 to 5, with a relationship of $m+x \geq 4$ being satisfied; $R^1$ and $R^2$ are each independently a substituted or unsubstituted hydrocarbon group having 1 to 20 carbon atoms; a plurality of $R^3$, a plurality of $R^4$, and $R^5$ to $R^8$ are each independently a group selected from a hydrogen atom, a substituted or unsubstituted hydrocarbon group having 1 to 20 carbon atoms, or a halogen atom; a hydrogen atom, a carbon atom, or both, of $R^1$ to $R^8$ are optionally replaced by at least one atom selected from the group consisting of a nitrogen atom, an oxygen atom, a phosphorus atom, a halogen atom, and a silicon atom; two or more selected from $R^5$ to $R^8$ are optionally bonded to one another to form a monocyclic or polycyclic ring, and adjacent substituents are optionally directly bonded to form a multiple bond; $R^3$ is optionally bonded to one or more selected from $R^4$ to $R^8$ to form a monocyclic or polycyclic ring, and adjacent substituents are optionally directly bonded to form a multiple bond; $R^3$ groups bonded to the same carbon are optionally bonded to one another to form a monocyclic or polycyclic ring; while $R^3$ groups bonded to different carbon atoms are in a mutually independent relationship, $R^3$ groups bonded to adjacent carbon atoms are optionally directly bonded to one another to form a multiple bond; $R^4$ is optionally bonded to one or more selected from $R^3$ and $R^5$ to $R^8$ to form a monocyclic or polycyclic ring, and adjacent substituents are optionally directly bonded to form a multiple bond; $R^4$ groups bonded to the same carbon are optionally bonded to one another to form a monocyclic or polycyclic ring; and while $R^4$ groups bonded to different carbon atoms are in a mutually independent relationship, $R^4$ groups bonded to adjacent carbon atoms are optionally directly bonded to one another to form a multiple bond.

[2] The solid titanium catalyst component (I) according to [1], wherein m is 2 or more, and n is 2 or more.

[3] The solid titanium catalyst component (I) according to [1], wherein $R^3$ to $R^8$ are independent substituents.

[4] The solid titanium catalyst component (I) according to [1], wherein $R^1$ and $R^2$ are each independently a substituted

or unsubstituted alkyl group, a substituted or unsubstituted alkenyl group, a substituted or unsubstituted cycloalkyl group, a substituted or unsubstituted aryl group, or a substituted or unsubstituted heteroaryl group.

[5] The solid titanium catalyst component (I) according to [1], wherein $R^3$ to $R^8$ are each independently a group selected from a hydrogen atom, a substituted or unsubstituted alkyl group, a substituted or unsubstituted alkenyl group, a substituted or unsubstituted cycloalkyl group, a substituted or unsubstituted cycloalkenyl group, a substituted or unsubstituted alkoxy group, a substituted or unsubstituted alkenyloxy group, a substituted or unsubstituted cycloalkyloxy group, a substituted or unsubstituted cycloalkenyloxy group, a substituted or unsubstituted aryl group, a substituted or unsubstituted aryloxy group, a substituted or unsubstituted heteroaryl group, or a substituted or unsubstituted heteroaryloxy group.

[6] A catalyst for olefin polymerization, comprising: the solid titanium catalyst component (I) according to [1]; and an organometallic compound catalyst component (II) comprising a metal element selected from Group 1, Group 2, and Group 13 of the periodic table.

[7] The catalyst for olefin polymerization according to [6], further comprising an electron donor (III).

[8] An olefin polymerization method, comprising polymerizing an olefin in the presence of the catalyst for olefin polymerization according to [6] or [7].

[9] A propylene polymer satisfying the following requirements (αH) to (δH):

$$(\alpha H)\ MFR \geq 10\ g/10\ min$$

$$(\beta H)\ \Delta H \geq 80\ J/g$$

$$(\gamma H)\ \Delta H\ (high) \geq 10\%$$

(δH) [ΔH (mid) / ΔH (low)] > [ΔH (high) / ΔH (mid)]

wherein definitions of characters in the requirements (αH) to (δH) are as follows:

MFR: Melt flow rate (g/10 min) determined at 230°C under a load of 2.16 kg in accordance with ASTM 1238 standard;
ΔH: Amount of heat of fusion (J/g) measured by DSC method;
ΔH (high): Proportion % of amount of heat of fusion in region higher than 165°C in ΔH;
ΔH (mid): Proportion % of amount of heat of fusion in region of 160°C or higher and 165°C or lower in ΔH; and
ΔH (low): Proportion % of amount of heat of fusion in region lower than 160°C in ΔH;
provided that the sum of ΔH (high), ΔH (mid), and ΔH (low) is 100%.

[10] The propylene polymer according to [9], further satisfying the following requirement (εH):

$$(\varepsilon H)\ \Delta H\ (low) < 61\%$$

[11] A propylene polymer satisfying the following requirements (αL) to (δL):

$$(\alpha L)\ MFR < 10\ g/10\ min$$

$$(\beta L)\ \Delta H \geq 80\ J/g$$

$$(\gamma L)\ \Delta H\ (high) \geq 18.5\%,\ \Delta H\ (mid) \geq 28\%,\ and\ [\Delta H\ (high) + \Delta H\ (mid)] \leq 80\%$$

$$(\delta L)\ Tmf \geq 170.0°C$$

wherein definitions of characters in the requirements (αL) to (δL) are as follows:

MFR: Melt flow rate (g/10 min) determined at 230°C under a load of 2.16 kg in accordance with ASTM 1238 standard;
ΔH: Amount of heat of fusion (J/g) measured by DSC method;
ΔH (high): Proportion % of amount of heat of fusion in region higher than 165°C in ΔH;
ΔH (mid): Proportion % of amount of heat of fusion in region of 160°C or higher and 165°C or lower in ΔH; and
ΔH (low): Proportion % of amount of heat of fusion in region lower than 160°C in ΔH;
provided that the sum of ΔH (high), ΔH (mid), and ΔH (low) is 100%; and
Tmf: Final melting point °C determined by the following method with a differential scanning calorimeter (DSC) in a DSC220C apparatus manufactured by Seiko Instruments Inc.;
3 to 10 mg of a sample is sealed into an aluminum pan,
heated from room temperature to 240°C at a rate of 80°C/min,
retained at 240°C for 1 min,
cooled to 0°C at a rate of 80°C/min,
retained at 0°C for 1 min,
heated to 150°C at a rate of 80°C/min,
retained at 150°C for 5 min, and
heated to 180°C at a rate of 1.35°C/min to give a chart, and the temperature value of the intersection between the baseline and the tangent of the inflection point on the high temperature side of the peak appearing on the chart is regarded as the final melting point.

[12] The propylene polymer according to [11], further satisfying the following requirement (εL):

$$(\varepsilon L)\ Tmf - \Delta H\ (high) \geq 149.0$$

[13] A propylene polymer satisfying the following requirements (αS) to (εS):

$$(\alpha S)\ \text{Decane-soluble component content} \geq 5\%$$

$$(\beta S)\ \Delta H \geq 80\ J/g$$

$$(\gamma S)\ Tmf \geq 169^\circ C$$

$$(\delta S)\ \Delta H\ (low) \geq 61\%,\ \text{and}\ 20\% \geq \Delta H\ (high) \geq 5\%$$

(εS) Content of structural unit derived from olefin other than propylene in decane-insoluble moiety ≤ 5 mol%
wherein definitions of characters in the requirements (αS) to (εS) are as follows:

ΔH: Amount of heat of fusion (J/g) measured by DSC method;
ΔH (high): Proportion % of amount of heat of fusion in region higher than 165°C in ΔH;
ΔH (mid): Proportion % of amount of heat of fusion in region of 160°C or higher and 165°C or lower in ΔH; and
ΔH (low): Proportion % of amount of heat of fusion in region lower than 160°C in ΔH;
provided that the sum of ΔH (high), ΔH (mid), and ΔH (low) is 100%; and
Tmf: Final melting point °C determined by the following method with a differential scanning calorimeter (DSC) in a DSC220C apparatus manufactured by Seiko Instruments Inc.;
3 to 10 mg of a sample is sealed into an aluminum pan,
heated from room temperature to 240°C at a rate of 80°C/min,
retained at 240°C for 1 min,
cooled to 0°C at a rate of 80°C/min,
retained at 0°C for 1 min,
heated to 150°C at a rate of 80°C/min,
retained at 150°C for 5 min, and

heated to 180°C at a rate of 1.35°C/min to give a chart, and the temperature value of the intersection between the baseline and the tangent of the inflection point on the high temperature side of the peak appearing on the chart is regarded as the final melting point.

**Advantageous** Effects of Invention

According to the present invention, an olefin polymer having extremely high stereoregularity, showing properties of a high melting point and molecular weight dependency of heat of fusion, and having a broad molecular weight distribution can be produced in a highly active manner. For applications such as film, a polymer that can be expected to have excellent transparency can be produced as well.

It can be expected that the use of the solid titanium catalyst component, the catalyst for olefin polymerization, and the olefin polymerization method of the present invention enables an olefin polymer having, for example, not only moldability and rigidity but also higher heat resistance to be produced.

**Brief Description of Drawing**

[Figure 1] Figure 1 is a chart of DSC measurement (conditions during second heating) of the polymer of Example 2-1.

**Description of Embodiments**

Hereinafter, the solid titanium catalyst component (I), the catalyst for olefin polymerization, the olefin polymer production method, and the propylene polymer according to the present invention will now be described in detail.

[Solid titanium catalyst component (I)]

The solid titanium catalyst component (I) according to the present invention contains titanium, magnesium, halogen, and a polyvalent ester compound having a specific cyclic structure (hereinafter also referred to as "a cyclic multiple-ester-group-containing compound (a)").

<Cyclic multiple-ester-group-containing compound (a)>

The cyclic multiple-ester-group-containing compound (a) is represented by the following formula (1):

[Formula 2]

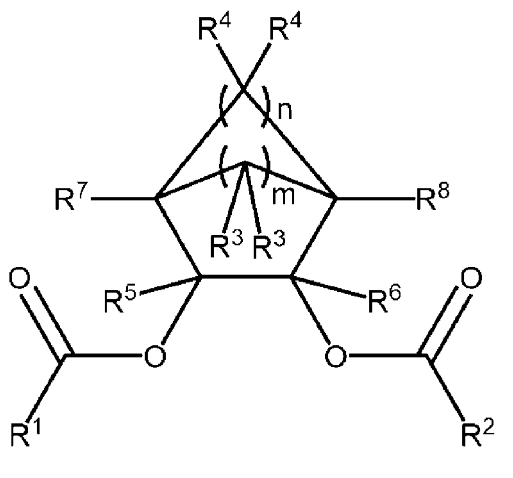

(1)

wherein m and n are each independently an integer of 1 to 5, with a relationship of m+x ≥ 4 being satisfied;
$R^1$ and $R^2$ are each independently a substituted or unsubstituted hydrocarbon group having 1 to 20 carbon atoms;
a plurality of $R^3$, a plurality of $R^4$, and $R^5$ to $R^8$ are each independently a hydrogen atom, a substituted or unsubstituted hydrocarbon group having 1 to 20 carbon atoms, or a halogen atom; a hydrogen atom, a carbon atom, or both, of $R^1$ to $R^8$ are optionally replaced by at least one atom selected from the group consisting of a nitrogen atom, an

oxygen atom, a phosphorus atom, a halogen atom, and a silicon atom; two or more selected from $R^5$ to $R^8$ are optionally bonded to one another to form a monocyclic or polycyclic ring, and adjacent substituents are optionally directly bonded to form a multiple bond; $R^3$ is optionally bonded to one or more selected from $R^4$ to $R^8$ to form a monocyclic or polycyclic ring, and adjacent substituents are optionally directly bonded to form a multiple bond; $R^3$ groups bonded to the same carbon are optionally bonded to one another to form a monocyclic or polycyclic ring; while adjacent $R^3$ groups are in a mutually independent relationship, $R^3$ groups are optionally directly bonded to one another to form a multiple bond; $R^4$ is optionally bonded to one or more selected from $R^3$ and $R^5$ to $R^8$ to form a monocyclic or polycyclic ring, and adjacent substituents are optionally directly bonded to form a multiple bond; $R^4$ groups bonded to the same carbon are optionally bonded to one another to form a monocyclic or polycyclic ring; and while adjacent $R^4$ groups are in a mutually independent relationship, $R^4$ groups are optionally directly bonded to one another to form a multiple bond.

m and n are each selected from an integer of 1 to 5, with a relationship of $m+x \geq 4$ being satisfied.

m and n are numerical values relating to the size and balance of the cyclic structure. A preferable lower limit of m and n is 2. Moreover, m and n are both 2 or more in a preferable embodiment.

The upper limit of m and n is 5, and a preferable upper limit is 4. The numerical values of m and n may be the same or different.

$R^1$ and $R^2$ are each independently a substituted or unsubstituted hydrocarbon group having 1 to 20 carbon atoms. $R^1$ and $R^2$ are preferably a substituted or unsubstituted hydrocarbon having an aryl group and 6 to 20 carbon atoms, and may be a structure containing a heteroatom, which will be described below. Examples of the heteroatom-containing aryl group include those with a basic skeleton having a structure in which the aryl structure itself contains a heteroatom, such as a pyrrole ring or a pyran ring, and those in which a substituent such as a heteroatom-containing hydrocarbon group, e.g., an alkoxy group, is bonded to a benzene ring.

A representative example of the heteroatom-containing structure is a structure having a heteroatom-containing substituent, a preferable example of such a substituent is a heteroatom-containing aryl group, and a particularly preferable example is an oxygen-containing aryl group.

$R^3$ to $R^8$ and R are each independently a group selected from a hydrogen atom, a substituted or unsubstituted hydrocarbon group having 1 to 20 carbon atoms, or a halogen atom.

A hydrogen atom, a carbon atom, or both in $R^1$ to $R^8$ may be partially substituted with at least one atom selected from the group consisting of a nitrogen atom, an oxygen atom, a phosphorus atom, a halogen atom, and a silicon atom. That is to say, embodiments of $R^1$ to $R^8$ include hydrocarbon groups containing nitrogen, oxygen, phosphorus, halogen, and silicon. The elements may be substituted at one or multiple positions.

In the present invention, the term "atom" as in, for example, a halogen atom or a hydrogen atom in the description of a substituent may refer to, as a matter of course, aspects with a bond such as "H-" or "Cl-" when expressed in a structural formula.

$R^1$ and $R^2$ may be bonded to one another to form a ring structure. In addition, a substituent selected from the group consisting of $R^1$ and $R^2$ and a substituent selected from the group consisting of $R^3$ to $R^8$ may be bonded to one another to form a ring structure.

Concerning $R^3$ to $R^8$, adjacent substituents may be directly bonded to form a carbon-carbon double bond or triple bond.

$R^3$ may be bonded to one or more selected from $R^4$ to $R^8$ to form a monocyclic or polycyclic ring. $R^3$ groups bonded to the same carbon may be bonded to one another to form a monocyclic or polycyclic ring.

While $R^3$ groups bonded to different carbon atoms are in a mutually independent relationship, $R^3$ groups bonded to adjacent carbon atoms may be directly bonded to one another to form a multiple bond. Here, being in an independent relationship means that a plurality of $R^3$ groups can be clearly distinguished from each other in terms of structural formula, and, specifically, for example, refers to a structure in which a plurality of $R^3$ groups that are bonded to different carbon atoms are not bonded to one another to form a ring structure having three or more ring members.

$R^4$ may be bonded to one or more selected from $R^3$ and $R^5$ to $R^8$ to form a monocyclic or polycyclic ring, and adjacent substituents may be directly bonded to form a multiple bond. $R^4$ groups bonded to the same carbon may be bonded to one another to form a monocyclic or polycyclic ring.

While $R^4$ groups bonded to different carbon atoms are in a mutually independent relationship, $R^4$ groups bonded to adjacent carbon atoms may be directly bonded to one another to form a multiple bond. The phrase "being in an independent relationship" is as described for $R^3$.

At least one of the substituents $R^3$ to $R^8$ may be preferably a substituent other than hydrogen from the viewpoint of a balance between activity, stereoregularity, and other properties. Moreover, one or more carbon atoms that form the cyclic structure may preferably be quaternary carbon.

As will be described below, the basic cyclic structure represented by the formula (1) is considered as greatly influencing catalyst performance, and thus $R^5$ to $R^8$ may be preferably independent from each other from the viewpoint

of production cost and ease of handling. $R^5$ to $R^8$ are also preferably independent from $R^3$ and $R^4$. On the other hand, embodiments of $R^5$ to $R^8$ may be bonded to one another to form a cyclic structure as described above. The moiety that forms the ring may have a monocyclic structure as well as a polycyclic structure. The moiety that forms the ring may be a structure having a double structure and a further cyclic structure. The cyclic structure that is formed by the substituents being bonded to one another may be preferably a structure having a double bond. The double bond is more preferably a carbon-carbon double bond. The carbon-carbon double bond includes an aromatic structure. Such a ring structure is the same as a structure containing $R^3$ and $R^4$ bonded to carbon, which will be described below.

The hydrocarbon group is a monovalent hydrocarbon group having 1 to 20 carbon atoms, preferably 1 to 10 carbon atoms, more preferably 2 to 8 carbon atoms, even more preferably 3 to 8 carbon atoms, yet more preferably 4 to 8 carbon atoms, and particularly preferably 4 to 6 carbon atoms. Examples of the hydrocarbon group include aliphatic hydrocarbon groups, alicyclic hydrocarbon groups, and aromatic hydrocarbon groups, such as a methyl group, an ethyl group, a n-propyl group, an isopropyl group, a n-butyl group, an isobutyl group, a hexyl group, a heptyl group, an octyl group, a 2-ethylhexyl group, a decyl group, a dodecyl group, a tetradecyl group, a hexadecyl group, an octadecyl group, an eicosyl group, a cyclohexyl group, a substituted or unsubstituted aryl group such as a phenyl group, and a substituted or unsubstituted cycloalkenyl group. The alicyclic hydrocarbon groups and the aromatic hydrocarbon groups may contain a substituent. Among such substituents, preferable are, for example, a n-butyl group, an isobutyl group, a hexyl group, an octyl group, and a phenyl group, and more preferable are a n-butyl group, an isobutyl group, and a phenyl group.

$R^1$ to $R^8$ may be hydrocarbon groups containing nitrogen, oxygen, phosphorus, halogen, and silicon. Such substituents can be selected from known structures. More specifically, preferable examples include a carbonyl structure-containing group such as a carboxylic acid ester group, an aldehyde group, an acetyl group, or an oxycarbonylalkyl group, an alkoxy group, a substituted or unsubstituted alkoxy group, a substituted or unsubstituted alkenyloxy group, a substituted or unsubstituted cycloalkyloxy group, a substituted or unsubstituted cycloalkenyloxy group, a substituted or unsubstituted aryloxy group, a substituted or unsubstituted heteroaryl group, a substituted or unsubstituted heteroaryloxy group, and a siloxy group. The heteroatom is preferably nitrogen and oxygen, and more preferably oxygen.

The heteroatom-containing substituent is preferably an aryl group containing an oxygen-containing substituent, and a preferable example is, specifically, a structure in which an oxygen-containing substituent such as an alkoxy group, an aryloxy group, an alkoxyalkyl group, an aryloxyalkyl group, and a substituent in which oxygen of the above substituent is replaced with a carbonyl group or a carboxyl group is bonded to an aromatic skeleton. Among such substituents, a substituent in which an alkoxy group or an aryloxy group is bonded to an aromatic skeleton is preferable, and a substituent in which an alkoxy group is bonded to an aromatic skeleton is more preferable. The number of carbon atoms in the oxygen-containing substituent is preferably 1 to 10, more preferably 1 to 8, and even more preferably 1 to 6. More specifically, preferably examples in addition to the methoxyphenyl group include an ethoxyphenyl group, a propyloxyphenyl group, an isopropyloxyphenyl group, a butoxyphenyl group, and a phenoxyphenyl group. An aryl group containing such an oxygen-containing substituent may be used particularly preferably for $R^1$ and $R^2$.

Preferably, at least one of $R^1$ to $R^8$ is a substituent of the above preferable embodiments, and, more preferably, all are substituents of the above preferable embodiments.

Among such substituents, $R^3$ to $R^8$ are preferably each independently a hydrogen atom, a hydrocarbon group such as a substituted or unsubstituted alkyl group, a substituted or unsubstituted alkenyl group, a substituted or unsubstituted cycloalkyl group, a substituted or unsubstituted cycloalkenyl group, a substituted or unsubstituted alkoxy group, a substituted or unsubstituted alkenyloxy group, or a substituted or unsubstituted aryl group; or a heteroatom-containing hydrocarbon group such as a substituted or unsubstituted cycloalkyloxy group, a substituted or unsubstituted cycloalkenyloxy group, a substituted or unsubstituted aryloxy group, a substituted or unsubstituted heteroaryl group, or a substituted or unsubstituted heteroaryloxy group. Among these, a hydrocarbon group is more preferable, and a substituted or unsubstituted alkyl group is particularly preferable.

The carbon chain structure including the C-$R^3$ structure and the C-$R^4$ structure of the formula (1) may be a structure composed of any of a single bond, a double bond, and a triple bond, and is preferably composed mainly of a single bond. A heteroatom may be present between the carbon chain structures. Examples of such chain structures include (divalent) structural formulae as shown below:

[Formula 3]

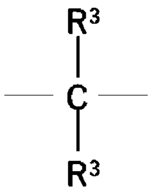
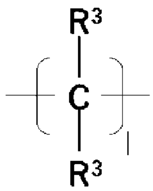
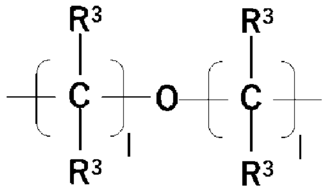
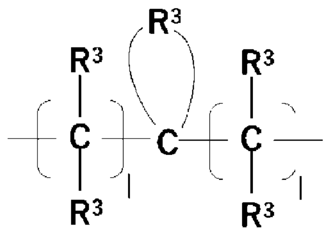

(l is a natural number.)

At least one of $R^3$ to $R^8$, or $R^4$ to $R^8$ in particular, is preferably a substituent other than hydrogen. Moreover, two or more substituents may preferably be substituents other than hydrogen. In such a case, two or more kinds of substituents may be concomitantly present, or all substituents may be of a single kind. Such substituents can be selected from the substituents exemplified as $R^1$ to $R^8$. The substituent other than hydrogen is preferably a hydrocarbon group or an oxygen-containing hydrocarbon group, and particularly preferably a hydrocarbon group. More specifically, the substituent other than hydrogen is a substituent selected from a substituted or unsubstituted alkyl group and cycloalkyl group, and is in particular an unsubstituted alkyl group.

Among $R^3$ to $R^8$, at least one of $R^7$ and $R^8$ is particularly preferably the substituent other than hydrogen.

The solid titanium catalyst component containing a compound having the above structure tends to have an excellent balance between, for example, activity, stereospecificity, molecular weight controllability, and reaction control.

Examples of such cyclic multiple-ester-group-containing compounds (a) include the following structures. Some structural formulae of the exemplary compounds below have stereoisomers, and while some isomeric structures are depicted, there may be other isomeric structures that are not exemplified.

[Formula 4]

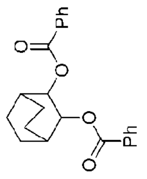
1-1

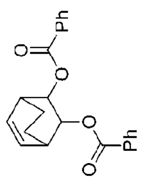
1-2

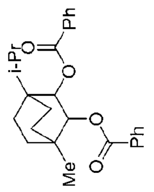
1-3

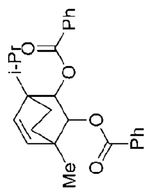
1-4

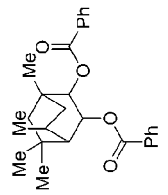
1-5

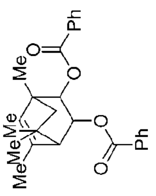
1-6

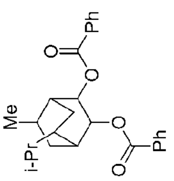
1-7

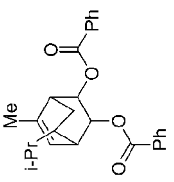
1-8

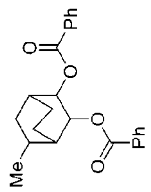
1-9

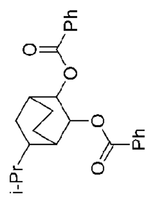
1-10

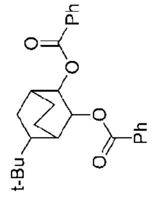
1-11

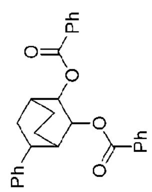
1-12

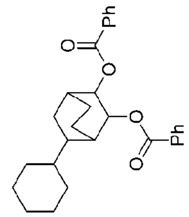
1-13

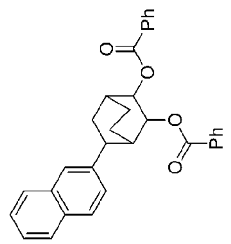
1-14

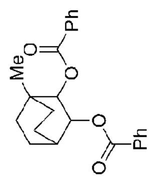
1-15

[Formula 5]

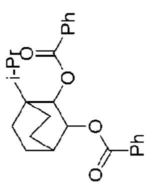
1-16

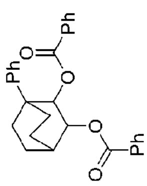
1-17

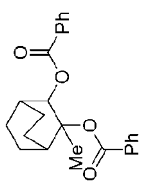
1-18

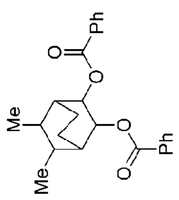
1-19

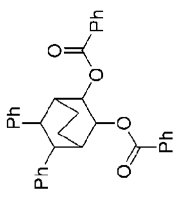
1-20

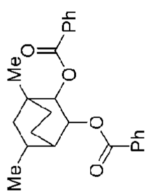
1-21

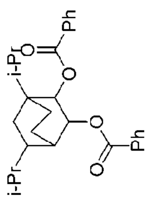
1-22

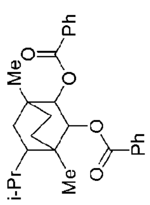
1-23

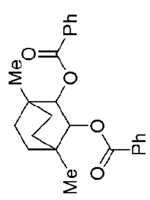
1-24

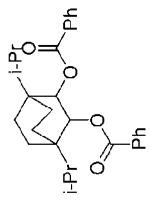
1-25

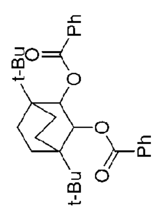
1-26

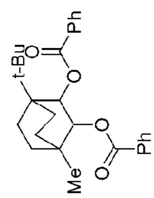
1-27

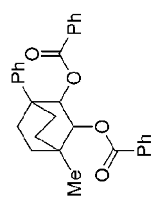
1-28

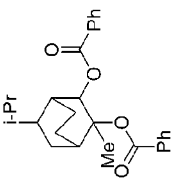
1-29

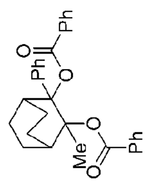
1-30

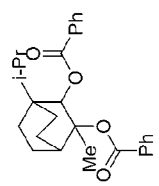
1-31

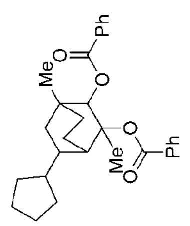
1-32

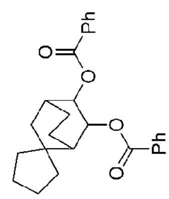
1-33

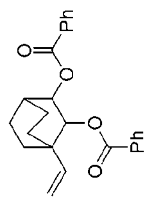
1-34

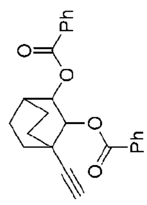
1-35

[Formula 6]

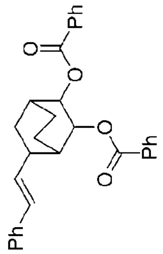

1-36

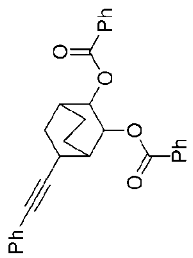

1-37

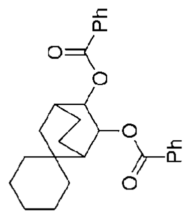

1-38

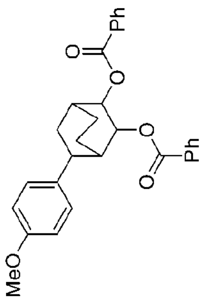

1-39

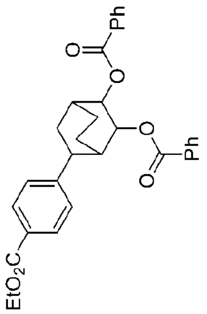

1-40

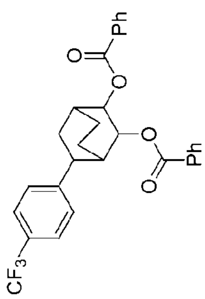

1-41

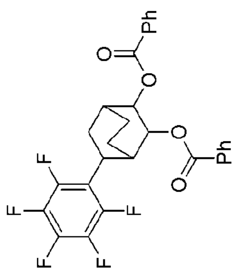

1-42

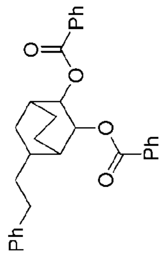

1-43

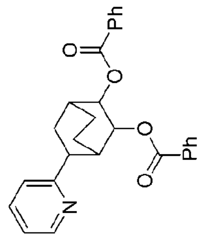

1-44

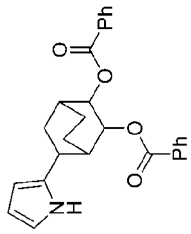

1-45

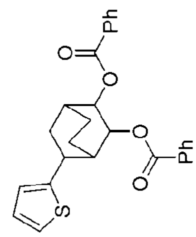

1-46

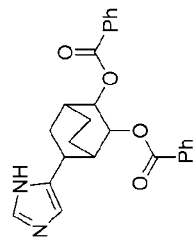

1-47

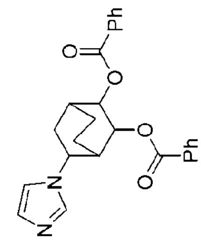

1-48

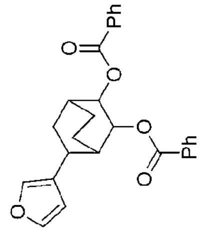

1-49

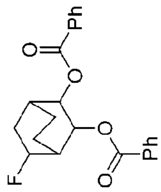

1-50

[Formula 7]

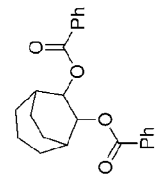
1-55

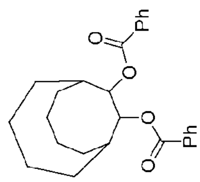
1-60

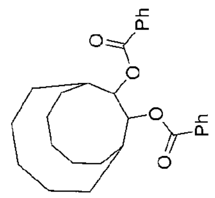
1-65

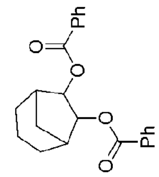
1-54

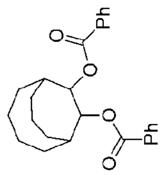
1-59

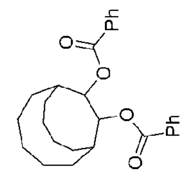
1-64

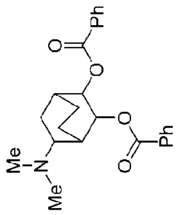
1-53

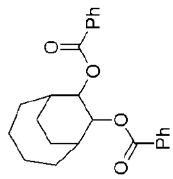
1-58

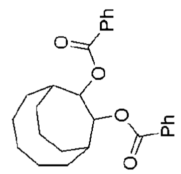
1-63

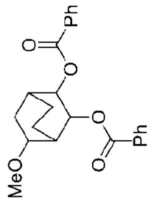
1-52

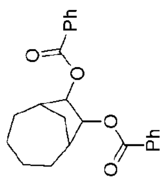
1-57

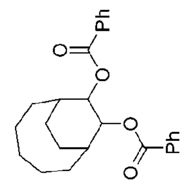
1-62

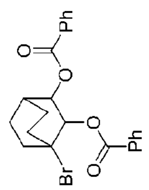
1-51

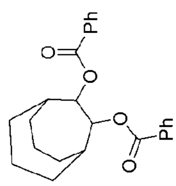
1-56

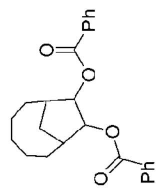
1-61

[Formula 8]

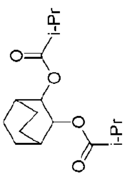
1-66

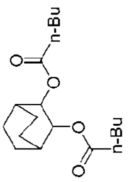
1-67

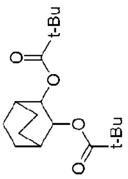
1-68

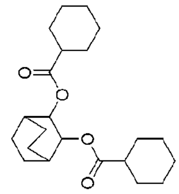
1-69

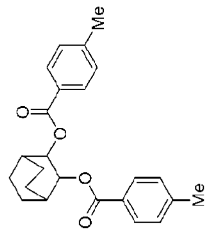
1-70

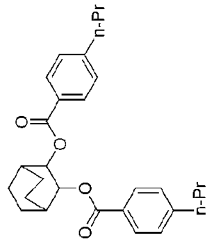
1-71

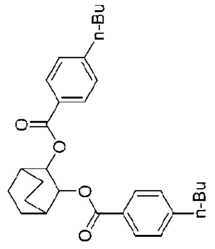
1-72

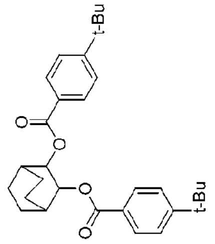
1-73

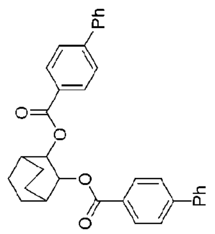
1-74

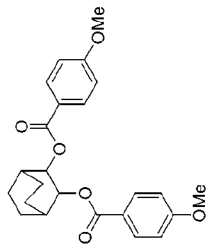
1-75

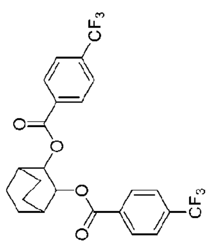
1-76

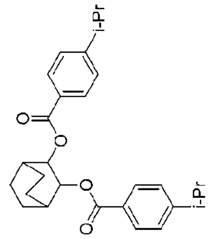
1-77

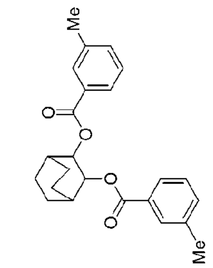
1-78

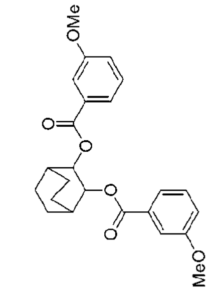
1-79

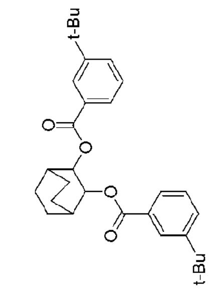
1-80

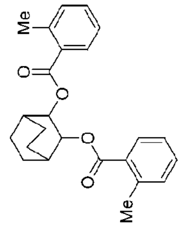
1-81

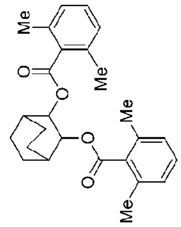
1-82

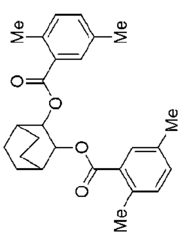
1-83

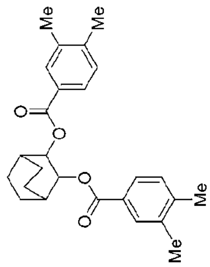
1-84

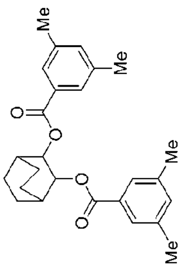
1-85

[Formula 9]

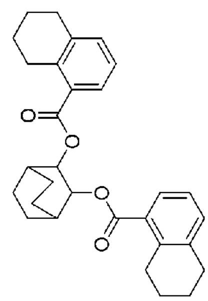
1-86

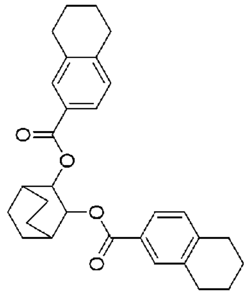
1-87

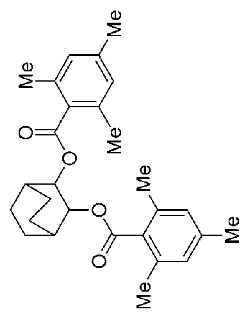
1-88

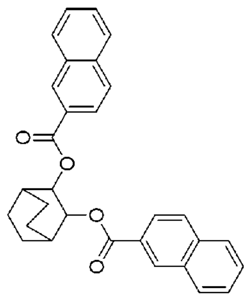
1-89

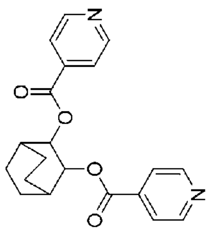
1-90

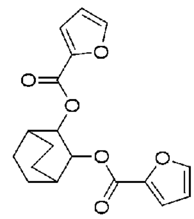
1-91

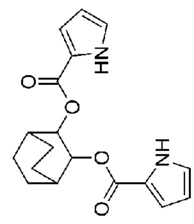
1-92

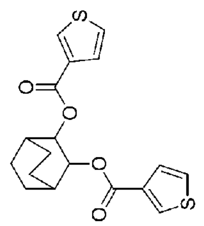
1-93

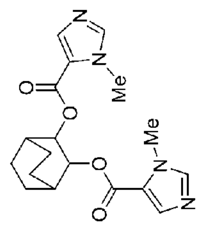
1-94

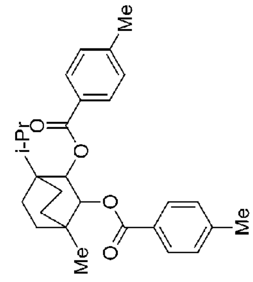
1-95

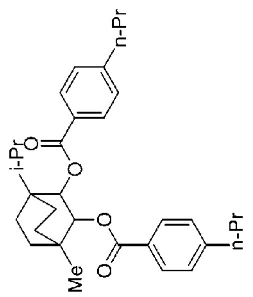
1-96

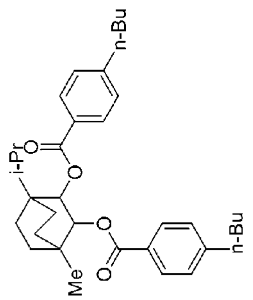
1-97

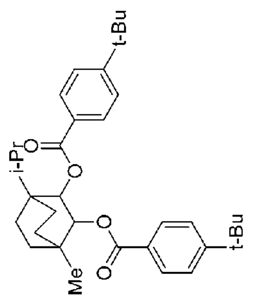
1-98

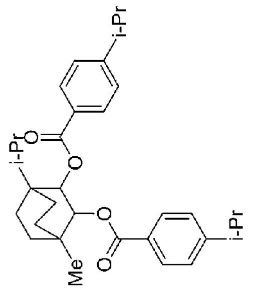
1-99

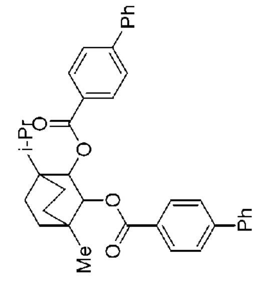
1-100

[Formula 10]

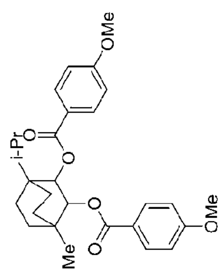

1-101

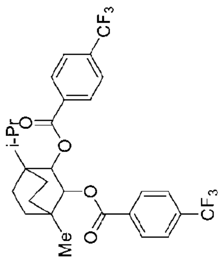

1-102

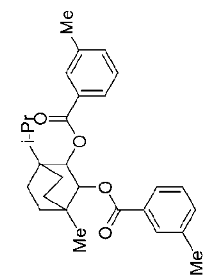

1-103

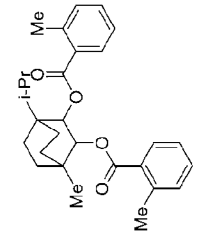

1-104

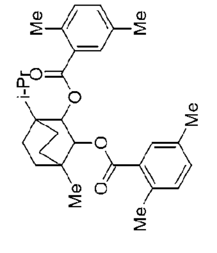

1-105

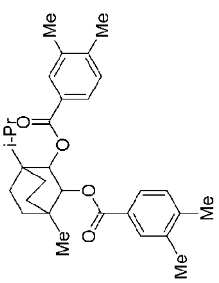

1-106

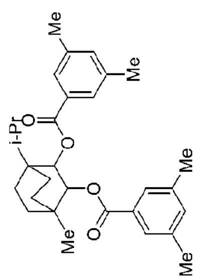

1-107

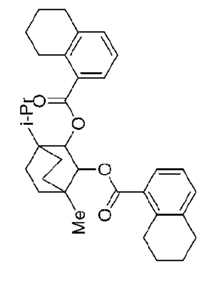

1-108

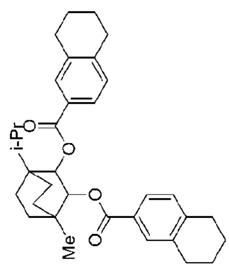

1-109

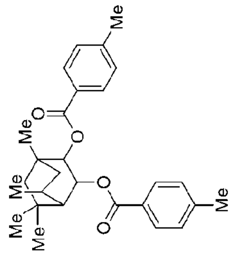

1-110

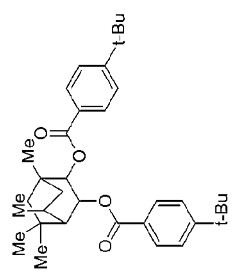

1-111

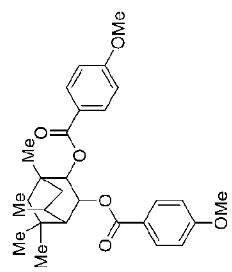

1-112

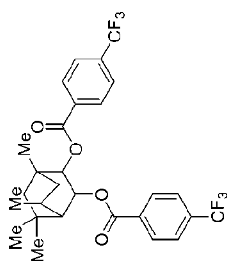

1-113

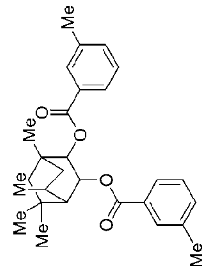

1-114

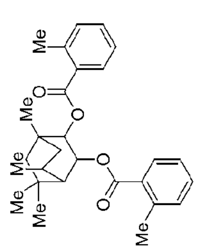

1-115

[Formula 11]

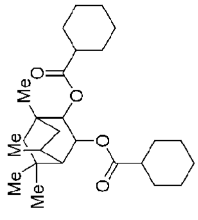
1-116

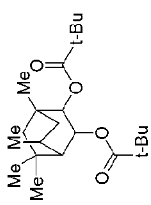
1-117

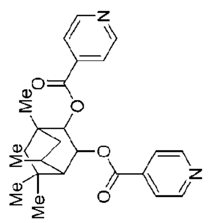
1-118

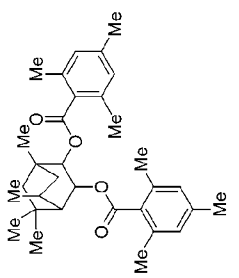
1-119

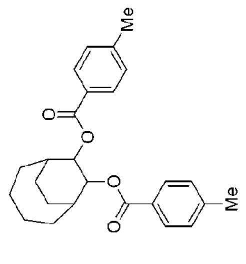
1-120

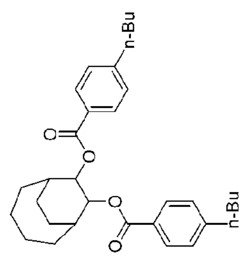
1-121

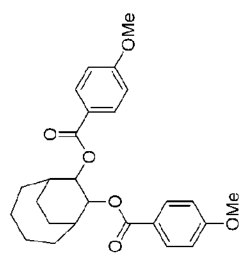
1-122

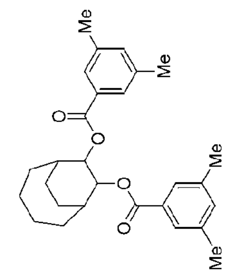
1-123

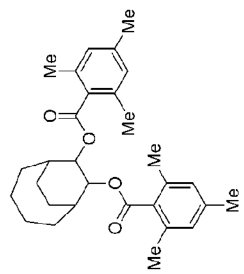
1-124

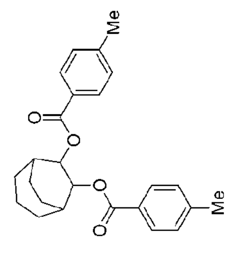
1-125

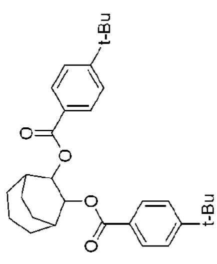
1-126

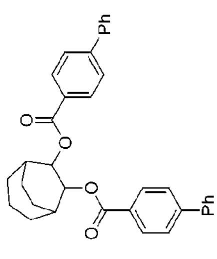
1-127

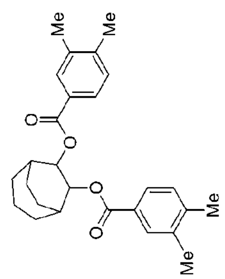
1-128

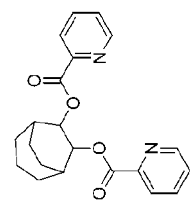
1-129

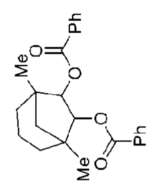
1-130

[Formula 12]

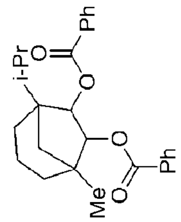
1-131

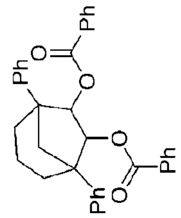
1-132

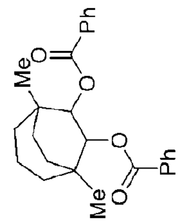
1-133

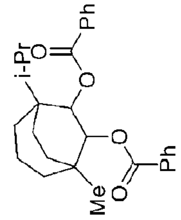
1-134

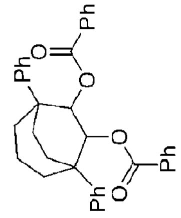
1-135

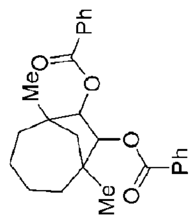
1-136

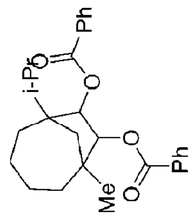
1-137

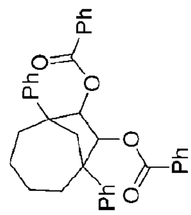
1-138

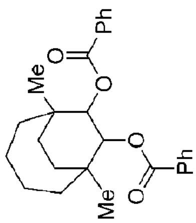
1-139

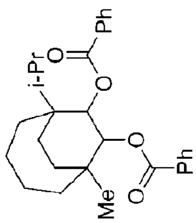
1-140

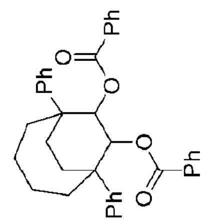
1-141

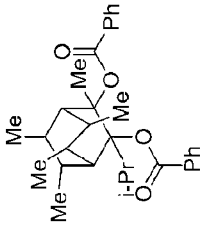
1-142

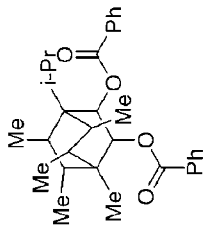
1-143

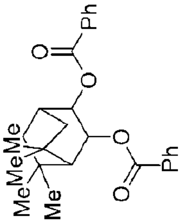
1-144

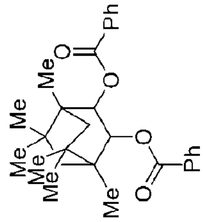
1-145

[Formula 13]

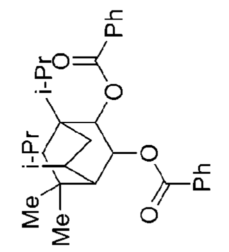

1-150

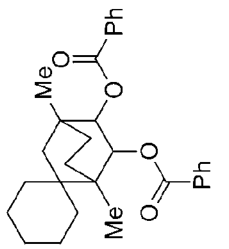

1-149

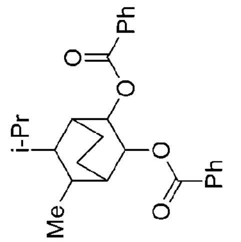

1-148

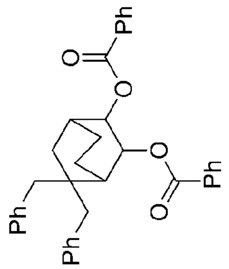

1-153

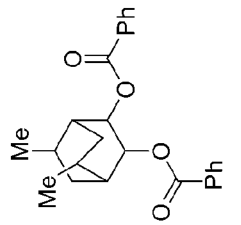

1-147

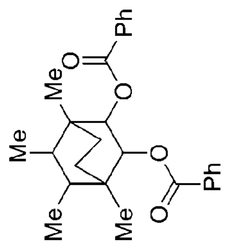

1-152

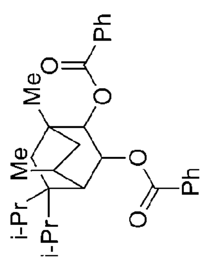

1-146

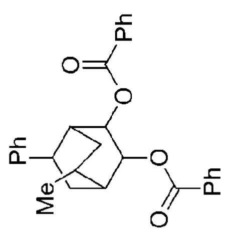

1-151

In the structural formulae depicted above, a methyl group is denoted as "Me", an ethyl group is denoted as "Et", a butyl group is denoted as "Bu", and a phenyl group is denoted as "Ph". Also, "i" represents "iso", and "t" represents "tertially".

Compounds having a diester structure as above have isomers such as cis and trans forms derived from an $OCOR^1$ group and an $OCOR^2$ group in the formula (1), and any structure has an effect that meets the object of the present invention. A cis form is more preferable. A higher content of a cis form tends to result in a higher activity, and a higher stereoregularity of the resulting polymer.

One of these compounds may be used singly, or two or more may be used in combination. As long as the object of the present invention is not defeated, the cyclic multiple-ester-group-containing compound (a) may be used in

combination with a catalyst component (b) and a catalyst component (c) that will be described below.

The cyclic multiple-ester-group-containing compound (a) may be formed during the course of preparing the solid titanium catalyst component (I). For example, when preparing the solid titanium catalyst component (I), providing the step of bringing, for example, a carboxylic acid anhydride or a carboxylic acid halide corresponding to the catalyst component (a) to be substantially into contact with the corresponding polyol also enables the cyclic multiple-ester-group-containing compound (a) to be contained in the solid titanium catalyst component.

There is a tendency that the olefin polymer production method of the present invention likely provides a polymer having a broad molecular weight distribution and high stereoregularity in a highly active manner. While the reason therefor is currently not clear, it is presumed as follows.

The cyclic multiple-ester-group-containing compound (a) used in the present invention has, as described above, a specific multicyclic structure, and it is thus presumed that the compound has suitable rigidity as a compound, and the structural displacement is relatively small. On the other hand, the structure can be understood as concomitantly having also moieties that allows rather flexible movement. Accordingly, it seems that when the ester compound (A) coordinates to a titanium compound or a magnesium compound that will be described below, it maintains a stable structure, and variations of stereospecificity and polymerization reaction activity as a catalyst during an olefin polymerization reaction are small. The flexible structural moieties are expected to alleviate strain resulting from the cyclic structure, and thus may have a buffer-like function against changes of the reaction environment. From these viewpoints, it seems that a highly stereoregular polymer can be obtained in a highly active manner. Also, from such viewpoints, it can be presumed that the ester compound (A) potentially provides even a high molecular weight component.

On the other hand, in the case of a stable structure with little structural displacement, there were initially concerns about a narrow molecular weight distribution, but as shown in the Examples below, the method of the present invention enables a polymer having a broad molecular weight distribution to be produced. This, as presumed by the present inventors, is due to the possibility that, in the case of the cyclic multiple-ester-group-containing compound (a), small variations of cyclic structures and combinations of such variations of respective ring structures highly affect the molecular weight of the resulting polymer, and having multiple ring structures results in a variety of combinations of stereoisomeric structures that the respective rings can take (such as a chair conformation and a boat conformation).

In addition to the cyclic multiple-ester-group-containing compound (a), a magnesium compound and a titanium compound are used in the preparation of the solid titanium catalyst component (I) of the present invention.

<Magnesium compound>

Specific examples of such magnesium compounds include known magnesium compounds such as:

magnesium halides such as magnesium chloride and magnesium bromide;
alkoxymagnesium halides such as methoxymagnesium chloride, ethoxymagnesium chloride, and phenoxymagnesium chloride;
alkoxymagnesium such as ethoxymagnesium, isopropoxymagnesium, butoxymagnesium, and 2-ethylhexoxymagnesium;
aryloxymagnesium such as phenoxymagnesium; and
carboxylic acid salts of magnesium, such as magnesium stearate.

One of these magnesium compounds may be used singly, or two or more may be used in combination. Also, such a magnesium compound may be a complex compound with another metal, a composite compound, or a mixture with another metal compound.

Among these magnesium compounds, a halogen-containing magnesium compound is preferable. Magnesium halide and, in particular, magnesium chloride are preferably used. Alkoxymagnesium such as ethoxymagnesium is preferably used as well. The magnesium compound may be a compound that is derived from another substance, such as a compound obtained by bringing an organomagnesium compound such as a Grignard reagent into contact with, for example, titanium halide, silicon halide, or alcohol halide.

<Titanium compound>

Examples of the titanium compound include tetravalent titanium compounds represented by the general formula:

$$Ti(OR')_gX_{4-g}$$

wherein R' is a hydrocarbon group, X is a halogen atom, and g is $0 \le g \le 4$. More specific examples include:

titanium tetrahalides such as $TiCl_4$ and $TiBr_4$;
alkoxytitanium trihalides such as $Ti(OCH_3)Cl_3$, Ti $(OC_2H_5)$ $Cl_3$, $Ti(O\text{-}n\text{-}C_4H_9)Cl_3$, Ti $(OC_2H_5)$ $Br_3$, and Ti $(O\text{-}iso\text{-}C_4H_9)$ $Br_3$;
alkoxytitanium dihalides such as $Ti(OCH_3)_2Cl_2$ and $Ti(OC_2H_5)_2Cl_2$;
alkoxytitanium monohalides such as $Ti(OCH_3)_3Cl$, $Ti(O\text{-}n\text{-}C_4H_9)_3Cl$, and $Ti(OC_2H_5)_3Br$; and
tetraalkoxytitanium such as $Ti(OCH_3)_4$, $Ti(OC_2H_5)_4$, $Ti(OC_4H_9)_4$, and $Ti(O\text{-}2\text{-}ethylhexyl)_4$.

Among these, titanium tetrahalides are preferable, and titanium tetrachloride is particularly preferable. One of these titanium compounds may be used singly, or two or more may be used in combination.
Examples of such magnesium compounds and titanium compounds can also include those described in detail in, for example, Patent Literature 1 and Patent Literature 2.
In the preparation of the solid titanium catalyst component (I) used in the present invention, known methods can be used without limitation except that the cyclic multiple-ester-group-containing compound (a) is used. Examples of specific preferable methods include the following methods (P-1) to (P-4).
(P-1) Method involving bringing a solid adduct composed of a magnesium compound and a catalyst component (b), the cyclic multiple-ester-group-containing compound (a), and a liquid titanium compound into contact with each other in a suspended state in the presence of an inert hydrocarbon solvent.
(P-2) Method involving bringing a solid adduct composed of a magnesium compound and a catalyst component (b), the cyclic multiple-ester-group-containing compound (a), and a liquid titanium compound into contact with each other in divided portions.
(P-3) Method involving bringing a solid adduct composed of a magnesium compound and a catalyst component (b), the cyclic multiple-ester-group-containing compound (a), and a liquid titanium compound into contact with each other in a suspended state and in divided portions in the presence of an inert hydrocarbon solvent.
(P-4) Method involving bringing a liquid magnesium compound composed of a magnesium compound and a catalyst component (b), a liquid titanium compound, and the cyclic multiple-ester-group-containing compound (a) into contact with each other.
The reaction temperature is in a range of preferably - 30°C to 150°C, more preferably -25°C to 130°C, and even more preferably -25°C to 120°C.
Production of the solid titanium catalyst component can be performed also in the presence of a known medium as necessary. Examples of the medium include slightly polar aromatic hydrocarbons such as toluene and known aliphatic hydrocarbons and alicyclic hydrocarbon compounds such as heptane, octane, decane, and cyclohexane, and preferable examples among these are aliphatic hydrocarbons.
When the reaction is performed within the above range, the effect of obtaining a polymer having a broad molecular weight distribution, activity, and the stereoregularity of the resulting polymer can be simultaneously achieved at a higher level.

(Catalyst component (b))

The catalyst component (b) used to form the solid adduct and the liquid magnesium compound is preferably a known compound capable of solubilizing the magnesium compound in a temperature range of about room temperature to 300°C, and, for example, alcohols, aldehydes, amines, carboxylic acids, and mixtures thereof are preferable. Examples of these compounds include those described in detail in Patent Literature 1 and Patent Literature 2.
More specific examples of alcohols capable of solubilizing the magnesium compound include:

aliphatic alcohols such as methanol, ethanol, propanol, butanol, isobutanol, ethylene glycol, 2-methylpentanol, 2-ethylbutanol, n-heptanol, n-octanol, 2-ethylhexanol, decanol, and dodecanol;
alicyclic alcohols such as cyclohexanol and methylcyclohexanol;
aromatic alcohols such as benzyl alcohol and methylbenzyl alcohol; and
aliphatic alcohols having an alkoxy group, such as n-butyl cellosolve.

Examples of carboxylic acids include organic carboxylic acids having 7 or more carbon atoms, such as caprylic acid and 2-ethylhexanoic acid. Examples of aldehydes include aldehydes having 7 or more carbon atoms, such as capric aldehyde and 2-ethylhexyl aldehyde.
Examples of amines include amines having 6 or more carbon atoms, such as heptylamine, octylamine, nonylamine, laurylamine, and 2-ethylhexylamine.
Preferable examples of the catalyst component (b) are the above alcohols, and, for example, ethanol, propanol, butanol, isobutanol, hexanol, 2-ethylhexanole, and decanol are particularly preferable.
While the amounts of the magnesium compound and the catalyst component (b) used when preparing the solid

adduct and the liquid magnesium compound also vary according to, for example, the kinds and contact conditions, the magnesium compound is used in an amount of 0.1 to 20 mol/liter and preferably 0.5 to 5 mol/liter based on the unit volume of the catalyst component (b). Also, a medium that is inert to the solid adduct can be used in combination as necessary. Preferable examples of the medium include known hydrocarbon compounds such as heptane, octane, and decane.

While the compositional ratio of magnesium to the catalyst component (b) in the resulting solid adduct and the liquid magnesium compound cannot be generally specified because the ratio varies according to the kind of the compound used, the catalyst component (b) per mole of magnesium in the magnesium compound is in a range of preferably 2.0 mol or more, more preferably 2.2 mol or more, even more preferably 2.6 mol or more, and particularly preferably 2.7 mol or more, and preferably 5 mol or less.

<Aromatic carboxylic acid ester and/or compound having two or more ether bonds via multiple carbon atoms>

The solid titanium catalyst component (I) of the present invention may further contain an aromatic carboxylic acid ester and/or a compound having two or more ether bonds via multiple carbon atoms (hereinafter also referred to as a "catalyst component (c) "). The catalyst component (c) when contained in the solid titanium catalyst component (I) of the present invention may increase activity and stereoregularity and further broaden the molecular weight distribution.

Known aromatic carboxylic acid esters and polyether compounds that are preferably used in conventional catalysts for olefin polymerization, such as compounds described in Patent Literature 2 and JP2001-354714A, can be used without limitations as the catalyst component (c).

Specific examples of the aromatic carboxylic acid esters include aromatic carboxylic acid monoesters such as benzoic acid esters and toluic acid esters, and aromatic polycarboxylic acid esters such as phthalic acid esters. Among these, aromatic polycarboxylic acid esters are preferable, and phthalic acid esters are more preferable. The phthalic acid esters are preferably alkyl phthalates such as ethyl phthalate, n-butyl phthalate, isobutyl phthalate, hexyl phthalate, and heptyl phthalate, and diisobutyl phthalate is particularly preferable.

More specific examples of the polyether compound include compounds represented by the following formula (3):

[Formula 14]

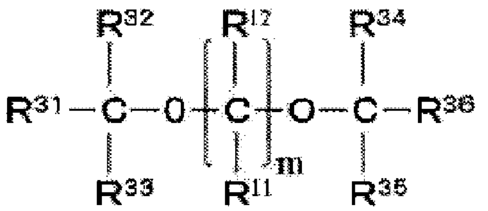

... (3)

wherein m is an integer of 1≤m≤10 and more preferably an integer of 3≤m≤10; and $R^{11}$, $R^{12}$, and $R^{31}$ to $R^{36}$ are each independently a hydrogen atom or a substituent having at least one element selected from carbon, hydrogen, oxygen, fluorine, chlorine, bromine, iodine, nitrogen, sulfur, phosphorus, boron, and silicon.

When m is 2 or more, a plurality of $R^{11}$ and $R^{12}$ may be the same or different. Any $R^{11}$, $R^{12}$, $R^{31}$ to $R^{36}$, and preferably $R^{11}$ and $R^{12}$, may together form a ring other than a benzene ring.

Specific examples of such compounds include:

monosubstituted dialkoxypropanes such as 2-isopropyl-1,3-dimethoxypropane, 2-s-butyl-1,3-dimethoxypropane, and 2-cumyl-1,3-dimethoxypropane;

disubstituted dialkoxypropanes such as 2-isopropyl-2-isobutyl-1,3-dimethoxypropane, 2,2-dicyclohexyl-1,3-dimethoxypropane, 2-methyl-2-isopropyl-1,3-dimethoxypropane, 2-methyl-2-cyclohexyl-1,3-dimethoxypropane, 2-methyl-2-isobutyl-1,3-dimethoxypropane, 2,2-diisobutyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2,2-di-s-butyl-1,3-dimethoxypropane, 2,2-dineopentyl-1,3-dimethoxypropane, 2-isopropyl-2-isopentyl-1,3-dimethoxypropane, and 2-cyclohexyl-2-cyclohexylmethyl-1,3-dimethoxypropane;

dialkoxyalkanes such as 2,3-dicyclohexyl-1,4-diethoxybutane, 2,3-dicyclohexyl-1,4-diethoxybutane, 2,3-diisopropyl-1,4-diethoxybutane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, and 2,4-diisoamyl-1,5-dimethoxypentane;

trialkoxyalkanes such as 2-methyl-2-methoxymethyl-1,3-dimethoxypropane, 2-cyclohexyl-2-ethoxymethyl-1,3-diethoxypropane, and 2-cyclohexyl-2-methoxymethyl-1,3-dimethoxypropane; and

dialkoxycycloalkanes such as 2,2-diisobutyl-1,3-dimethoxy-4-cyclohexenyl, 2-isopropyl-2-isoamyl-1,3-dimethoxy-4-cyclohexenyl, 2-cyclohexyl-2-methoxymethyl-1,3-dimethoxy-4-cyclohexenyl, 2-isopropyl-2-methoxymethyl-1,3-dimethoxy-4-cyclohexenyl, 2-isobutyl-2-methoxymethyl-1,3-dimethoxy-4-cyclohexenyl, 2-cyclohexyl-2-ethoxymethyl-1,3-dimethoxy-4-cyclohexenyl, 2-isopropyl-2-ethoxymethyl-1,3-dimethoxy-4-cyclohexenyl, and 2-isobutyl-2-ethoxymethyl-1,3-dimethoxy-4-cyclohexenyl.

Among these, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl -1,3-dimethoxypropane, and 2,2-bis(cyclohexylmethyl) 1,3-dimethoxypropane are particularly preferable.

One of these compounds may be used singly, or two or more may be used in combination.

The cyclic multiple-ester-group-containing compound (a), the catalyst component (b), and the catalyst component (c) as above can be generally regarded as belonging to components that are called electron donors by those skilled in the art. The electron donor components are known to show, for example, the effect of increasing the stereoregularity of the resulting polymer, the effect of controlling the compositional distribution of the resulting copolymer, the aggregating-agent effect of controlling the particle shape and the particle size of catalyst particles, while maintaining the high catalyst activity.

The cyclic multiple-ester-group-containing compound (a) of the present invention is considered as also showing the effect capable of further controlling the molecular weight distribution by the electron donor.

In the solid titanium catalyst component (I) used in the present invention, halogen/titanium (an atomic ratio) (i.e., the number of moles of halogen atoms/the number of moles of titanium atoms) is desirably 2 to 100 and preferably 4 to 90;

the cyclic multiple-ester-group-containing compound (a)/titanium (a molar ratio) (i.e., the number of moles of the cyclic multiple-ester-group-containing compound (a)/the number of moles of titanium atoms) is desirably 0.01 to 100 and preferably 0.2 to 10; and
regarding the catalyst component (b) and the catalyst component (c), the catalyst component (b)/titanium atoms (a molar ratio) is desirably 0 to 100 and preferably 0 to 10; and the catalyst component (c)/titanium atoms (a molar ratio) is desirably 0 to 100 and preferably 0 to 10.

Magnesium/titanium (an atomic ratio) (i.e., the number of moles of magnesium atoms/the number of moles of titanium atoms) is desirably 2 to 100, and preferably 4 to 50.

The content of components that may be contained in other than the cyclic multiple-ester-group-containing compound (a), such as the catalyst component (b) and the catalyst component (c), is preferably 20 wt% or less and more preferably 10 wt% or less based on 100 wt% of the cyclic multiple-ester-group-containing compound (a).

As for the more detailed conditions for preparing the solid titanium catalyst component (I), the conditions described in, for example, EP585869A1 (the specification of European Patent Application Publication No. 0585869) and Patent Literature 2 can be preferably used except that the cyclic multiple-ester-group-containing compound (a) is used.

[Catalyst for olefin polymerization]

The catalyst for olefin polymerization according to the present invention contains:

the solid titanium catalyst component (I) according to the present invention, and
an organometallic compound catalyst component (II) containing a metal atom selected from Group 1, Group 2, and Group 13 of the periodic table.

<Organometallic compound catalyst component (II)>

A compound containing a Group 13 metal such as an organoaluminum compound, an alkyl complex compound of a Group 1 metal and aluminum, or an organometallic compound of a Group 2 metal can be used as the organometallic compound catalyst component (II). Among these, an organoaluminum compound is preferable. Specific preferable examples of the organometallic compound catalyst component (II) include organometallic compound catalyst components described in known documents such as the aforementioned EP585869A1.

<Electron donor (III)>

The catalyst for olefin polymerization of the present invention may contain, together with the organometallic compound catalyst component (II), an electron donor (III) as necessary. The electron donor (III) is preferably an organosilicon compound. Examples of the organosilicon compound include compounds represented by the following general formula (4):

$$R^{S}{}_{n}Si(OR'')_{4-n} \ ... \ (4)$$

wherein $R^S$ and R'' are hydrocarbon groups, and n is an integer of 0<n<4.

Specifically, as for the organosilicon compound represented by the general formula (4), for example, diisopropyldimethoxysilane, t-butylmethyldimethoxysilane, t-butylmethyldiethoxysilane, t-amylmethyldiethoxysilane, dicyclohexyldimethoxysilane, cyclohexylmethyldimethoxysilane, cyclohexylmethyldiethoxysilane, vinyltrimethoxysilane, vinyltriethoxysilane, t-butyltriethoxysilane, phenyltriethoxysilane, cyclohexyltrimethoxysilane, cyclopentyltrimethoxysilane, 2-methylcyclopentyltrimethoxysilane, cyclopentyltriethoxysilane, dicyclopentyldimethoxysilane, dicyclopentyldiethoxysilane, tricyclopentylmethoxysilane, dicyclopentylmethylmethoxysilane, dicyclopentylethylmethoxysilane, and cyclopentyldimethylethoxysilane are used.

Among these, vinyltriethoxysilane, diphenyldimethoxysilane, dicyclohexyldimethoxysilane, cyclohexylmethyldimethoxysilane, and dicyclopentyldimethoxysilane are preferably used.

Also, silane compounds represented by the following formula (5) as described in WO2004/016662 are preferable examples of the organosilicon compound:

$$Si(OR^{a})_{3}(NR^{b}R^{c}) \ ... \ (5)$$

wherein $R^a$ is a hydrocarbon group having 1 to 6 carbon atoms, examples of $R^a$ include unsaturated or saturated aliphatic hydrocarbon groups having 1 to 6 carbon atoms, and particularly preferable examples include hydrocarbon groups having 2 to 6 carbon atoms. Specific examples include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, and a cyclohexyl group, and, among these, an ethyl group is particularly preferable.

In the formula (5), $R^b$ is a hydrocarbon group having 1 to 12 carbon atoms or hydrogen, and examples of $R^b$ include unsaturated or saturated aliphatic hydrocarbon groups having 1 to 12 carbon atoms and hydrogen. Specific examples include a hydrogen atom, a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group, and, among these, an ethyl group is particularly preferable.

In the formula (5), $R^c$ is a hydrocarbon group having 1 to 12 carbon atoms, and examples of $R^c$ include unsaturated or saturated aliphatic hydrocarbon groups having 1 to 12 carbon atoms and hydrogen. Specific examples include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group, and, among these, an ethyl group is particularly preferable.

Specific examples of the compound represented by the formula (5) include dimethylaminotriethoxysilane, diethylaminotriethoxysilane, diethylaminotrimethoxysilane, diethylaminotriethoxysilane, diethylaminotri n-propoxysilane, di-n-propylaminotriethoxysilane, methyl-n-propylaminotriethoxysilane, t-butylaminotriethoxysilane, ethyl-n-propylaminotriethoxysilane, ethyl-iso-propylaminotriethoxysilane, and methylethylaminotriethoxysilane.

Other examples of the organosilicon compound include compounds represented by the following formula (6).

$$R^{N}NSi(OR^{a})_{3} \ ... \ (6)$$

wherein $R^N$N is a cyclic amino group, and examples of the cyclic amino group include a perhydroquinolino group, a perhydroisoquinolino group, a 1,2,3,4-tetrahydroquinolino group, a 1,2,3,4-tetrahydroisoquinolino group, and an octamethyleneimino group.

Specific examples of the compounds represented by the formula (6) include (perhydroquinolino)triethoxysilane, (perhydroisoquinolino)triethoxysilane, (1,2,3,4-tetrahydroquinolino)triethoxysilane, (1,2,3,4-tetrahydroisoquinolino)triethoxysilane, and octamethyleneiminotriethoxysilane.

Two or more of these organosilicon compounds can be used in combination.

Preferable examples of other useful compounds as the electron donor (III) include polyether compounds described as examples of the aromatic carboxylic acid ester and/or the compound having two or more ether bonds via multiple carbon atoms (the catalyst component (c)).

Among those polyether compounds, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, and 2,2-bis(cyclohexylmethyl)-1,3-dimethoxypropane are particularly preferable.

One of these compounds can be used singly, and two or more can be used in combination.

The concomitant use of the electron donor (III) often enables stereoregularity and molecular weight to be regulated. Specifically, when the proportion of the electron donor (III) to the organometallic compound catalyst component is increased, there is a tendency that a highly stereoregular polymer is likely obtained, and a polymer having a high molecular weight is likely obtained. On the other hand, when the proportion of the electron donor (III) used is decreased, there is a tendency that a polymer having a relatively low stereoregularity (for example, the decane-soluble component content, which will be described below, is relatively high) is likely obtained, and a polymer having a low molecular weight is likely obtained.

The catalyst for olefin polymerization of the present invention may contain, other than the components described above, other components useful for olefin polymerization as necessary. Examples of other components include carriers such as silica, antistatic agents, particle aggregating agents, and storage stabilizers.

[Olefin polymerization method]

The olefin polymerization method according to the present invention involves performing olefin polymerization using the catalyst for olefin polymerization of the present invention. Herein, "polymerization" may include the meaning of homopolymerization as well as copolymerization such as random copolymerization and block copolymerization.

In the olefin polymerization method of the present invention, polymerization can also be performed in the presence of a prepolymerization catalyst obtained by prepolymerizing an $\alpha$-olefin in the presence of the catalyst for olefin polymerization of the present invention. This prepolymerization is performed by prepolymerizing an $\alpha$-olefin in an amount of 0.1 to 1000 g, preferably 0.3 to 500 g, and particularly preferably 1 to 200 g per gram of the catalyst for olefin polymerization.

In prepolymerization, the catalyst can be used in a concentration higher than the catalyst concentration in the system of polymerization.

The concentration of the solid titanium catalyst component (I) in prepolymerization, in terms of titanium atom, is desirably in the range of usually about 0.001 to 200 mmol, preferably about 0.01 to 50 mmol, and particularly preferably 0.1 to 20 mmol per liter of a liquid medium.

It is sufficient that the amount of the organometallic compound catalyst component (II) in prepolymerization is an amount such that 0.1 to 1000 g and preferably 0.3 to 500 g of a polymer is produced per gram of the solid titanium catalyst component (I), and it is desirable that the amount is usually about 0.1 to 300 mol, preferably about 0.5 to 100 mol, and particularly preferably 1 to 50 mol per mole of titanium atoms in the solid titanium catalyst component (I).

In prepolymerization, for example, the electron donor (III) can also be used as necessary, and, at this time, such components are used in an amount of 0.1 to 50 mol, preferably 0.5 to 30 mol, and even more preferably 1 to 10 mol per mole of titanium atoms in the solid titanium catalyst component (I). By regulating the amount of the electron donor (III), the stereoregularity of the resulting olefin polymer may be regulated.

Prepolymerization can be performed under mild conditions after adding an olefin and the above catalyst components to an inert hydrocarbon medium.

In this case, specific examples of the inert hydrocarbon medium used include:

aliphatic hydrocarbons such as propane, butane, pentane, hexane, heptane, octane, decane, dodecane, and kerosene;
alicyclic hydrocarbons such as cycloheptane, methylcycloheptane, 4-cycloheptane, and methyl-4-cycloheptane;
aromatic hydrocarbons such as benzene, toluene, and xylene;
halogenated hydrocarbons such as ethylenechloride and chlorobenzene; and

mixtures thereof.

Among these inert hydrocarbon media, aliphatic hydrocarbons are preferably used in particular. In the case of using an inert hydrocarbon medium, prepolymerization is preferably performed in a batch-wise manner.

On the other hand, prepolymerization can also be performed using the olefin itself as a solvent, and prepolymerization can also be performed in a substantially solvent-free state. In this case, prepolymerization is preferably performed in a continuous manner.

The olefin used in prepolymerization may be the same as or different from the olefin used in polymerization that will be described below, and, specifically, propylene is preferable.

Desirably, the temperature during prepolymerization is in a range of usually about -20 to +100°C, preferably about - 20 to +80°C, and even more preferably 0 to +40°C.

Next, polymerization will now be described that is performed by way of the above-described prepolymerization or without prepolymerization.

Examples of olefins that are usable (i.e., to be polymerized) in polymerization include α-olefins having 3 to 20 carbon atoms, e.g., linear olefins such as propylene, 1-butene, 1-pentene, 1-hexene, 1-octene, 1-decene, 1-dodecene, 1-tetradecene, 1-hexadecene, 1-octadecene, and 1-eicosene, and branched olefins such as 4-methyl-1-pentene, 3-methyl-1-pentene, and 3-methyl-1-butene, and preferable are propylene, 1-butene, 1-pentene, 4-methyl-1-pentene, and 3-methyl-1-butene. From the viewpoint that advantages of a polymer having a broad molecular weight distribution are likely exhibited in a highly rigid resin, propylene, 1-butene, 4-methyl-1-pentene, and 3-methyl-1-butene are particularly preferable.

In addition to these α-olefins, also usable are ethylene, aromatic vinyl compounds such as styrene and allylbenzene, and alicyclic vinyl compounds such as vinylcyclohexane and vinylcycloheptane. Moreover, cyclopentene, cycloheptene, norbornene, tetracyclododecene, and compounds having multiple unsaturated bonds such as conjugated dienes and non-conjugated dienes, e.g., dienes such as isoprene and butadiene, can also be used as polymerization feedstocks together with ethylene and α-olefin. One of these compounds may be used singly, or two or more may be used in combination (hereinafter, olefins used with ethylene or the "α-olefins having 3 to 20 carbon atoms" are also referred to as "further olefins").

Among the further olefins, ethylene and aromatic vinyl compounds are preferable. Out of the total 100 wt% of olefins, a small amount, e.g., 10 wt% or less and preferably 5 wt% or less, of further olefins such as ethylene may be used in combination.

In the present invention, prepolymerization and polymerization can be performed by any of the liquid-phase polymerization methods such as bulk polymerization, solution polymerization, and suspension polymerization, and the gas-phase polymerization methods.

When polymerization takes the reaction form of slurry polymerization, an inert hydrocarbon as used during the above-described prepolymerization can be used as a reaction solvent, and an olefin that is liquid at the reaction temperature can also be used.

In polymerization in the polymerization method of the present invention, the solid titanium catalyst component (I) is used in an amount, in terms of titanium atom, of usually about 0.0001 to 0.5 mmol and preferably about 0.005 to 0.1 mmol per liter of the polymerization volume. The organometallic compound catalyst component (II) is used in an amount of usually about 1 to 2000 mol, preferably about 5 to 500 mol, more preferably 10 to 350 mol, even more preferably 30 to 350 mol, and particularly preferably 50 to 350 mol per mole of titanium atoms in the prepolymerization catalyst components in the polymerization system. The electron donor (III), if used, is used in an amount of 0.001 to 50 mol, preferably 0.01 to 30 mol, and particularly preferably 0.05 to 20 mol per mole of metal atoms of the organometallic compound catalyst component (II). As described above, the stereoregularity and molecular weight may be regulated by way of the amount of the electron donor (III) used.

Performing polymerization in the presence of hydrogen makes it possible to regulate the molecular weight of the resulting polymer, and provides a polymer having a high melt flow rate.

In polymerization in the present invention, the olefin polymerization temperature is usually about 20 to 200°C, preferably about 30 to 100°C, and more preferably 50 to 90°C. The pressure is usually set to normal pressure to 10 MPa, and preferably 0.20 to 5 MPa. In the polymerization method of the present invention, polymerization can be performed in any of the batch-wise, semi-continuous, and continuous manners. Moreover, polymerization can be performed at two or more divided stages by changing the reaction conditions. Performing such multi-stage polymerization enables the molecular weight distribution of the olefin polymer to be further broadened.

The olefin polymer thus obtained may be any of, for example, a homopolymer, a random copolymer, and a block copolymer.

When olefin polymerization, or propylene polymerization in particular, is performed using the catalyst for olefin polymerization described above, a highly stereoregular propylene-based polymer having a decane-insoluble component content of 70% or more, preferably 85% or more, and particularly preferably 90% or more can be obtained.

Moreover, according to the olefin polymerization method of the present invention, polyolefin or, in particular, polypropylene having a broad molecular weight distribution can be obtained even without performing multi-stage polymerization, or even through polymerization having a small number of stages such as single-stage polymerization. It is a feature of the olefin polymerization method of the present invention that, in particular, an olefin polymer is often obtained that has a higher proportion of high molecular weight components and a lower proportion of low molecular weight components (which are especially referred to as sticky compounds) than conventional olefin polymers having a comparable melt flow rate (MFR). This feature can be verified by gel permeation chromatography (GPC) measurement that will be described below, and a polymer having both a high Mw/Mn value and a high Mz/Mw value can be obtained.

Polypropylene obtained using conventional solid titanium catalyst components including magnesium, titanium, halogen, and an electron donor generally has an Mw/Mn value of 5 or less and an Mz/Mw value of less than 4, which are indices of a molecular weight distribution as determined by GPC measurement, in an MFR range of 1 to 10 g/10 min, but when the olefin polymerization method of the present invention is used, an olefin polymer having an Mw/Mn value of 6 to 30 and preferably 7 to 20 can be obtained under the same polymerization conditions. Moreover, an olefin

polymer having an Mz/Mw value of preferably 4 to 15 and more preferably 4.5 to 10 can be obtained. In particular, according to the olefin polymerization method of the present invention, a polymer having a high Mz/Mw value is often obtained.

It is common knowledge among those skilled in the art that polypropylene having a high Mw/Mn value has excellent moldability and rigidity. On the other hand, a high Mz/Mw value indicates a high content ratio of high molecular weight component, and it is expected that the resulting polypropylene possibly has high melt tension and excellent moldability.

The use of the olefin polymerization method of the present invention enables a polymer having a broad molecular weight distribution to be obtained without performing multi-stage polymerization and thus, possibly, a polymer production apparatus to be more simplified. Also, application to a conventional multi-stage polymerization method is expected to enable a polymer having better melt tension and moldability to be obtained.

While there are other methods for obtaining a polymer having a broad molecular weight distribution such as a method involving melt-mixing or melt-kneading polymers having different molecular weights, polymers obtained by such methods in some cases do not have sufficiently increased melt tension or moldability despite the relatively complex procedure. This is presumably because polymers having different molecular weights, basically, are unlikely to mix. On the other hand, the polymer obtained by the olefin polymerization method of the present invention, because polymers having different molecular weights of extremely broad ranges are mixed at the catalyst level, i.e., the nano-level, is expected to have a high melt tension and excellent moldability.

The polymer obtained by the olefin polymerization method of the present invention has high stereoregularity as described above. Accordingly, the olefin polymer obtained by the method of the present invention tends to have a high melting point. The melting point is usually determined by differential scanning calorimetry (DSC).

As described above, the olefin polymer, or the propylene polymer in particular, obtained by the method of the present invention tends to have a broad molecular weight distribution and in particular a large Mz, and thus tends to have a distribution that spreads toward the high molecular weight side. Since the molecular mobility of an olefin polymer varies according to the molecular weight, a chart obtained by DSC measurement in the case of a polymer having a broad molecular weight distribution may have not a unimodal shape but a multimodal shape or a broad shape. That is to say, since an ultra-high molecular weight component is more unlikely to crystallize, it is conceived that a chart that has a broad shape on the low temperature side in a DSC measurement method is possibly due to an ultra-high molecular weight component. Accordingly, $\Delta H$ that is measured as heat of fusion (amount of heat of crystallization) may also tend to be low.

On the other hand, it was found that the DSC chart of the propylene polymer obtained using the method of the present invention tends to show a relatively small spread toward the low temperature side and also a high $\Delta H$. This is possibly because the polymer obtained by the method of the present invention, especially components in the ultra-high molecular weight region, has high stereoregularity, and thus showed a tendency that the polymer easily crystallizes, and that the chart has little spread toward the low temperature side.

It is said that the components in the ultra-high molecular weight region may cause problems, such as fish eyes, in applications where transparency and see-through properties are emphasized, such as film applications. The olefin polymer obtained by the method of the present invention tends to be capable of achieving a finely dispersed state that can also be referred to as a catalytically active species level, i.e., nano-level, as described above, and thus tends to be unlikely to cause such problems. Also, selecting the structure of the ester compound (a) used in the catalyst of the present invention enables the balance between the molecular weight and content of components in the ultra-high molecular weight region and the molecular weight and melt flow rate (MFR) of the entirety of the polymer to be regulated as well.

The reason why a polymer exhibiting such properties is obtained is probably that, as described above, the ester compound contained in the catalyst of the present application has a specific structure, and thus the reaction field is relatively stable. That is to say, as presumed by the present inventors, the highly stereospecific active site, while having a property of high level of stereoregularity controllability, may have the effect of preventing from becoming a specific state that causes a chain transfer reaction.

The polymer obtained by the method of the present invention shows a molecular weight distribution that also has a certain degree of spread toward the low molecular weight side. A low molecular weight component tends to have a weak crystal structure and a low melting point due to the low molecular weight.

It is also conceived that the propylene polymer obtained by the method of the present invention, because the stereoregularity of a low molecular weight component is high, possibly shows a DSC chart that has little spread toward the low temperature side.

In addition, a plurality of factors such as the possibility of exhibiting a nucleating agent effect in the crystallization step can also be conceived.

From these viewpoints, it is conceived that the propylene polymer obtained by the method of the present invention possibly has high stereoregularity regardless of the molecular weight range thereof. Accordingly, the polymer

has high heat of fusion and shows a relatively high degree of crystallinity.

[Propylene polymer]

Propylene-based polymers of the present invention can be roughly classified into three categories (a propylene polymer (H), a propylene polymer (L), and a propylene polymer (S)), which will be described below, depending mainly on the molecular weight (the melt flow rate (MFR) is one evaluation index) and stereoregularity (the decane-soluble component content is one index) thereof.

The definitions of various requirements for specifying the propylene polymers of the present invention are as follows:

MFR: Melt flow rate (unit: g/10 min) determined at 230°C under a load of 2.16 kg in accordance with ASTM 1238 standard

Tmf: Temperature (unit: °C) determined by the conditions described in the Examples, which is referred to as the final melting point

ΔH: Total amount of heat of fusion (unit: J/g) determined by DSC measurement (a second heating step) under the conditions described in the Examples

ΔH (high): Proportion % of amount of heat of fusion in region higher than 165°C in ΔH

ΔH (mid): Proportion % of amount of heat of fusion in region of 160°C or higher and 165°C or lower in ΔH

ΔH (low): Proportion % of amount of heat of fusion in region lower than 160°C of ΔH

ΔH (high), ΔH (mid), and ΔH (low) are numerical values attained when the amount of heat of ΔH is 100% (that is to say, the sum of ΔH (high), ΔH (mid), and ΔH (low) is 100%), and can be calculated by the ratio of the amounts of absorbed heat in the respective temperature regions determined in the corresponding DSC chart (corresponding to the area ratio in the DSC chart).

The propylene polymers of the present invention, which will be described in detail below, can all be obtained by polymerizing propylene preferably using the catalyst for olefin polymerization described above, but the production method therefor is not limited.

<Propylene polymer (H)>

The propylene polymer (H) of the present invention is a propylene polymer that tends to have a relatively low molecular weight, excellent moldability, and high rigidity, and that satisfies all of the following requirements:

$$(\alpha H)\ MFR \geq 10\ g/10\ min$$

$$(\beta H)\ \Delta H \geq 80\ J/g$$

$$(\gamma H)\ \Delta H\ (high) \geq 10\%$$

$$(\delta H)\ [\Delta H\ (mid) / \Delta H\ (low)] > [\Delta H\ (high) / \Delta H\ (mid)]$$

Each requirement will now be described below.

The propylene polymer (H) of the present invention satisfies the requirement (αH): MFR ≥ 10 g/10 min. MFR is well known as a simple evaluation index for the molecular weight of a propylene polymer and a simple evaluation index for the melt flowability of a polymer. Specifically, MFR is determined by a method in accordance with ASTM 1238 standard as described above. The MFR of the propylene polymer (H) of the present invention is preferably 15 g/10 min or higher, and more preferably 20 g/10 min or higher. A preferable upper limit is 1000 g/10 min, more preferably 800 g/10 min, and even more preferably 700 g/10 min.

The propylene polymer (H) of the present invention has a relatively high MFR range as described above, and is thus particularly suitable for injection molding among known various molding methods.

The propylene polymer (H) of the present invention satisfies the requirement (βH): ΔH ≥ 80 J/g. ΔH is the amount of heat of fusion of the propylene polymer (H), and it is recognized that the higher this value, the higher the degree of crystallinity. When this value is high, a large amount of heat is required until melting is complete even after the temperature

at which melting starts is reached, and the requirement (βH) is thus also an index for excellent heat resistance. ΔH of the propylene polymer (H) of the present invention is preferably 83 J/g or more, more preferably 85 J/g or more, and even more preferably 88 J/g or more. On the other hand, a preferable upper limit is 150 J/g, more preferably 130 J/g, and even more preferably 110 J/g.

The propylene polymer (H) satisfying this requirement has high heat resistance, and is thus suitably used especially in an injection molded article.

The propylene polymer (H) of the present invention satisfies the requirement (γH): ΔH (high) ≥ 10%. ΔH (high) can be considered as an index for heat resistance especially in a high melting temperature region (above 165°C). A high value thereof indicates excellent heat resistance, especially at high temperatures. When this index is 10% or more, the propylene polymer (H) of the present application is considered as having particularly high heat resistance, which is one of the important requirements that characterize the propylene polymer (H).

The requirement ΔH (high) is preferably 11% or more, and more preferably 13% or more. It is conceived by the present inventors that the propylene polymer components corresponding to the ΔH (high) region have extremely high stereoregularity and a relatively large amount of highly stereoregular ultra-high molecular weight components. Also, it is conceived by the present inventors that the propylene polymer components corresponding to the ΔH (high) region, other than merely having high heat resistance, may function as a crystallization nucleating agent for an increased crystallinity of the entirety of the propylene polymer (H).

While it is obvious that a higher ΔH (high) value is more advantageous in terms of heat resistance, a preferable upper limit thereof is 35%, more preferably 30%, and even more preferably 28% in consideration of the details of the requirement (δH), which will be described below, and the balance between, for example, elastic modulus and moldability.

The propylene polymer (H) of the present invention satisfies the requirement (δH): [ΔH (mid) / ΔH (low)] > [ΔH (high) / ΔH (mid)]. Those skilled in the art will understand that this requirement (δH) is an index that not only ΔH (high) but also ΔH (mid) is relatively high. More specifically, or in other words, it can be said that this requirement (δH) is an index indicating that the content of propylene polymer components corresponding to ΔH (high) and ΔH(mid) is relatively higher than the content of propylene polymer components corresponding to ΔH (low).

It is conceived by the present inventors that the propylene polymer (H) satisfying such a relationship may be showing an embodiment wherein, for example, when a part of the components corresponding to ΔH (high) functions as a crystallization nucleating agent component, accordingly the content of components that likely crystallize is relatively high, and thus a propylene polymer having a high degree of crystallinity, melting point, and heat of fusion is readily obtained.

[ΔH (mid) / ΔH (low)] is preferably higher than [ΔH (high) / ΔH (mid)] by 0.03 or more, and more preferably by 0.05 or more. The upper limit of the difference between [ΔH (mid) / ΔH (low)] and [ΔH (high) / ΔH (mid)] is not particularly limited, and is preferably 0.50, more preferably 0.45, even more preferably 0.40, and particularly preferably 0.35.

Moreover, the propylene polymer (H) of the present invention preferably has a ΔH (low) of less than 61% (requirement (εH)), more preferably 60% or less, even more preferably 59% or less, and particularly preferably 57% or less.

It is conceived by the present inventors that the propylene polymer (H) satisfying this requirement also shows an embodiment wherein, as described above, when a part of the components corresponding to ΔH (high) functions as a crystallization nucleating agent component, accordingly the content of components that likely crystallize is relatively high, and thus a propylene polymer having a high degree of crystallinity, melting point, and heat of fusion is readily obtained.

The final melting point Tmf of the propylene polymer (H) of the present invention is preferably 169.0°C or higher, more preferably 169.5°C or higher, and even more preferably 170.0°C or higher. As described above, the propylene polymer (H) of the present invention has extremely high stereoregularity, the ultra-high molecular weight components have high stereoregularity, and thus Tmf tends to be high. Such a polymer is expected to exhibit high heat resistance as well. On the other hand, while it is not important to set the upper limit of Tmf, a polymer having an excessively high Tmf may require specific molding methods and molding conditions to take advantage of its properties, and thus the upper limit of Tmf is preferably 200°C, more preferably 195°C, and even more preferably 190°C.

The propylene polymer (H) of the present invention is expected to exhibit not only high heat resistance but also high rigidity. Accordingly, the propylene polymer (H) of the present invention is suitably used in applications wherein high rigidity and high heat resistance are required. As described above, the crystallinity of the propylene polymer (H) of the present invention is easily increased, and thus there is a tendency that a molded article having higher performance is likely obtained by using a molding method that enables a specific orientation to be achieved. Accordingly, the propylene polymer (H) of the present invention can be expected to be suitable for applications such as injection molded articles, stretched films (e.g., uniaxially stretched films and biaxially stretched films), and fibers.

<Propylene polymer (L)>

The propylene polymer (L) of the present invention is a polymer that has a relatively high molecular weight and

tends to be suitable for the field of packaging materials such as sheets and films, and is a propylene polymer that satisfies the following requirements:

$$(\alpha L)\ MFR < 10\ g/10\ min$$

$$(\beta L)\ \Delta H \geq 80\ J/g$$

$$(\gamma L)\ \Delta H\ (high) \geq 18.5\%,\ \Delta H\ (mid) \geq 28\%,\ and\ [\Delta H\ (high) + \Delta H\ (mid)] \leq 80\%$$

$$(\delta L)\ Tmf \geq 170.0°C$$

Each requirement will now be described below.

The propylene polymer (L) of the present invention satisfies the requirement (αL): MFR < 10 g/10 min. MFR is a well-known index as described above. MFR of the propylene polymer (L) of the present invention is preferably 8 g/10 min or less, more preferably 6 g/10 min or less, and even more preferably 5 g/10 min or less. A preferable lower limit is 0.001 g/10 min, more preferably 0.005 g/10 min, and even more preferably 0.01 g/10 min.

The propylene polymer (L) of the present invention has a relatively low MFR range as described above, and is thus suitably used in, for example, extruded sheets, T-die films, blown films, blow-molded articles, and vacuum-molded articles.

The propylene polymer (L) of the present invention satisfies the requirement (βL): ΔH ≥ 80 J/g. ΔH is basically the same as the requirement (βH).

The propylene polymer (L) of the present invention satisfies the requirement (γL): ΔH (high) ≥ 18.5%, ΔH (mid) ≥ 28%, and [ΔH (high) + ΔH (mid)] ≤ 80%.

The lower limit of ΔH (high) is preferably 19.0%, more preferably 19.5%, and even more preferably 20.0%. On the other hand, the upper limit is preferably 35%, more preferably 30%, and even more preferably 28%.

The lower limit of ΔH (mid) is preferably 28.4%, more preferably 29.0%, even more preferably 29.5%, particularly preferably 30.0%, and especially preferably 33.0%. On the other hand, the upper limit is preferably 50.0%, more preferably 47.0%, and even more preferably 45.0%.

The upper limit of [ΔH (high) + ΔH (mid)] is preferably 75%, more preferably 70%, even more preferably 65%, and particularly preferably 63%. On the other hand, the lower limit is preferably 48.0%, more preferably 48.5%, and even more preferably 49.0%.

Excessively high ΔH (mid) may result in a small ΔH (high) value, and may also result in poor heat resistance. With excessively low ΔH (mid), the crystal nucleating agent effect expected from the ΔH (high)-corresponding components cannot be fully utilized, possibly resulting in poor heat resistance accordingly.

This requirement is an index showing that the propylene polymer (L) of the present invention has a particularly large amount of crystals that melt in a high temperature region (165°C or higher), or in other words, has excellent melting resistance (heat resistance) in a high temperature region, and, moreover, has a relatively large amount of components that melt in a medium temperature region (160°C to 165°C). When the molecular weight of a propylene polymer is high, the mobility of its molecular chain is relatively low, thus the propylene polymer unlikely crystallizes, and accordingly the degree of crystallinity tends to be low. However, as described above, the propylene polymer (L) of the present invention has a high content of propylene polymers corresponding to ΔH (high) and ΔH (low) and, thus, for the same presumed reason as above, it is conceived that the polymer even with a high molecular weight likely has a high degree of crystallinity, and has excellent heat resistance.

Accordingly, the propylene polymer (L) of the present invention is expected to be suitable for, for example, container and packaging material products such as sheets, films, and bottles, and provide products having high heat resistance. It is also expected that by adjusting and arranging the molding method, heat resistance, rigidity, and other properties can be suitably regulated.

The propylene polymer (L) of the present invention satisfies the requirement (δL): Tmf ≥ 170.0°C. Tmf is more preferably 171.0°C or higher, and even more preferably 171.5°C or higher. As described above, the propylene polymer (L) of the present invention has extremely high stereoregularity, the ultra-high molecular weight components have high stereoregularity, and thus Tmf tends to be high. Such a polymer is expected to exhibit high heat resistance accordingly. On the other hand, while it is not important to set a preferable upper limit of Tmf, a polymer having an excessively high

Tmf may require specific molding methods and molding conditions to take advantage of its properties, and thus the upper limit of Tmf is preferably 200°C, more preferably 195°C, and even more preferably 190°C.

The propylene polymer (L) of the present invention preferably satisfies the following requirement (εL): Tmf - ΔH (high) ≥ 149.0. This requirement can be considered as an index showing that Tmf tends to be increased according to the amount of propylene polymer components corresponding to ΔH (high). It can be considered that the propylene polymer (L) satisfying this requirement has high stereoregularity, and probably that components in the ultra-high molecular weight region in particular has high stereoregularity. Also, when the components in the ultra-high molecular weight region function as a crystallization nucleating agent, rigid crystals are likely to be formed accordingly and, probably, a polymer having a high Tmf according to the value of ΔH (high) is obtained as a result. It is conceived by the present inventors that the requirement (εL) is an index suggesting a polymer of such an embodiment.

The "Tmf - ΔH (high)" is more preferably 149.5 or more, even more preferably 150.0 or more, particularly preferably 150.5 or more, and especially preferably 151.0 or more. The upper limit is preferably 180, more preferably 177, and even more preferably 175 in consideration of the preferable upper limit of Tmf and lower limit of ΔH (high).

<Propylene polymer (S)>

The propylene polymer (S) of the present invention is a polymer having a relatively large amount of decane-soluble components and thus considered as being characterized by a balance between physical properties including flexibility and moldability as well, can also be considered as a polymer having a tendency of being suitable for the field of packaging materials such as sheets and films, and is a propylene polymer satisfying the following requirements:

(αS) Decane-soluble component content ≥ 5 mass%

(βS) ΔH ≥ 80 J/g

(γS) Tmf ≥ 169°C

(δS) ΔH (low) ≥ 61%, and 20% ≥ ΔH (high) ≥ 5%

(εS) Content of structural unit derived from olefin other than propylene in decane-insoluble moiety ≤ 5 mol%

Each requirement will now be described below.

The propylene polymer (S) of the present invention satisfies the requirement (αS): Decane-soluble component content ≥ 5 mass%. The decane-soluble component content is the content of components soluble in decane at 23°C in the propylene polymer (S) as determined by the method described in the Examples below. Normally, this index is well known as an index for the stereoregularity of an olefin polymer and the compositional distribution of a copolymer.

While in the propylene polymer the decane-soluble component content is preferably low in applications where the heat resistance thereof is utilized, in applications such as commonly used containers and packaging materials, not only heat resistance but also a balance between, for example, flexibility and transparency may be important. In particular, a lower decane-soluble component content may generally result in better transparency. Accordingly, there is a market for polymers having a relatively high decane-soluble component content.

The decane-soluble component content of the propylene polymer (S) of the present invention is 5 mass% or more, and preferably 6 mass% or more. On the other hand, the upper limit is preferably 20 mass% or less, more preferably 15 mass% or less, even more preferably 12 mass% or less, and particularly preferably 11 mass% or less in consideration of, for example, generation of tackiness in the molded article thereof.

The propylene polymer (S) of the present invention satisfies the requirement (βS): ΔH ≥ 80 J/g. The definition of ΔH is basically the same as the requirement (βH).

ΔH of the propylene polymer (S) of the present invention is characterized by exhibiting a relatively large value despite the relatively high decane-soluble component content thereof. It is conceived by the present inventors that this is probably because the components corresponding to ΔH (high), which will be described below, are contained in an amount within a specific range, and thus a large value is exhibited due to the influence (such as a crystal nucleating agent effect) of those components. However, ΔH is not an index that means a high melting temperature, and, therefore, as can be understood from the above requirement (αS) and the following requirement (δS) as well, the propylene polymer (S) is a polymer having characteristics different from those of the propylene polymer (H) and the propylene polymer (L).

The propylene polymer (S) of the present invention, while having a relatively large content of decane-soluble

components, has a high ΔH and is thus considered as having a high degree of crystallinity, and accordingly is expected to be advantageous in obtaining a film having rigid feel (resilience) when molded into, for example, a film.

ΔH of the propylene polymer (S) of the present invention is preferably 83 J/g or more, more preferably 85 J/g or more, and even more preferably 86 J/g or more. On the other hand, the upper limit is preferably 100 J/g, more preferably 97 J/g, and even more preferably 95 J/g. Excessively high ΔH may result in insufficient flexibility and transparency expected from the propylene polymer (S) of the present invention.

The propylene polymer (S) of the present invention satisfies the requirement (γS): Tmf ≥ 169.0°C. Tmf is preferably 169.2°C or higher, and more preferably 169.3°C or higher. On the other hand, the upper limit is preferably 180.0°C, more preferably 177.0°C, and even more preferably 175.0°C.

The propylene polymer (S) of the present invention is characterized by exhibiting a high Tmf despite a relatively large content of decane-soluble components. It is conceived by the present inventors that this, while relating to the requirement (δS), which will be described below, is probably derived from a relatively large amount of components corresponding to ΔH (high) being contained.

The propylene polymer (S) of the present invention satisfies the requirements (δS): ΔH (low) ≥ 61%, and 20% ≥ ΔH (high) ≥ 5%.

Concerning the propylene polymer (S) of the present invention, ΔH (high) and ΔH (low) satisfy the above conditions, and thus one of the characteristics of the propylene polymer (S) is that despite the relatively high decane-soluble component content, ΔH is relatively high as described in connection with the requirement (βS). The lower limit of ΔH (high) is preferably 5.5%, and more preferably 6.0%. On the other hand, the upper limit is preferably 15.0%, more preferably 12.0%, even more preferably 10.0%, and in particular 9.5%. The lower limit of ΔH (low) is preferably 62%, more preferably 63%, and even more preferably 64%. On the other hand, the upper limit is preferably 90%, more preferably 80%, and even more preferably 70%. These values within the above range are advantageous in obtaining a molded article having suitable rigid feel (resilience) while having suitable flexibility and transparency.

This requirement can be considered as indicating that components corresponding to ΔH (high), i.e., components having a high melting point are contained in a content that is within a specific range while the amount of polymer components having a low melting point is relatively large, or that is to say, the respective components having the completely opposite physical properties are contained in relatively large amounts.

It is conceived by the present inventors that components corresponding to ΔH (high) probably serve as a trigger (for example, some of them show an effect as a crystallization nucleating agent), thus the crystallinity of components corresponding to ΔH (low) is increased, and accordingly the propylene polymer (S) of the present application has a relatively high ΔH. The presumed reason why components corresponding to ΔH (high) have the effect of increasing crystallinity is basically the same as the reason described for the propylene polymer (H) and the propylene polymer (L).

Accordingly, the propylene polymer (S) of the present invention can be expected to be capable of suitably imparting rigid feel (such as stiff feeling) while maintaining the features of existing container and packaging material products such as sheets, films, and bottles.

The propylene polymer (S) of the present invention satisfies the requirement (εS): Content of structural unit derived from olefin other than propylene in decane-insoluble moiety ≤ 5 mol%. The content of structural unit derived from olefin other than propylene is preferably 4 mol% or less, and more preferably 3 mol% or less.

The decane-insoluble moiety refers to the components of the propylene polymer (S) of the present invention excluding the decane-soluble components specified in the requirement (αS). It is obvious that the value is 0 mol% when the propylene polymer (S) is a homopolymer.

The propylene polymer (H), the propylene polymer (L), and the propylene polymer (S) of the present invention may contain structural units derived from olefin other than propylene and polymerizable vinyl compounds as long as their respective characteristics and objectives are not adversely affected.

Preferable examples of the olefin include olefins and dienes as disclosed in the section concerning the olefin polymer production method, and preferable examples of the polymerizable vinyl compound include aromatic vinyl compounds such as styrene. More preferable olefins include ethylene, 1-butene, 1-pentene, 1-hexene, 1-octene, 1-decene, 1-hexadecene, and 1-octadecene. Among these, ethylene, 1-butene, 1-hexene, 1-octene, and 1-decene are more preferable examples, and ethylene and 1-butene are even more preferable examples. A preferable example of the polymerizable vinyl compound may be styrene.

The content of such other structural units is preferably 5 mol% or less, more preferably 3 mol% or less, even more preferably 1 mol% or less, and particularly preferably 0.5 mol% or less, based on the total content of propylene-derived structural units being 100 mol%.

The propylene polymer obtained by the method of the present invention can be used in known various applications. In particular, since the propylene polymer is expected to have high heat resistance and rigidity, the propylene polymer is suitable for, for example, various injection-molded article applications and, more specifically, automobile components and household electric appliance components. Also, the propylene polymer can be used in various sheets and films due to the broad molecular weight distribution. In particular, the propylene polymer is suitable for, for example,

separator applications in lithium ion batteries and capacitors as well. Also, the propylene polymer can be suitably used in, for example, stamping-molded articles, calender-molded articles, and rotational-molded articles.

## Examples

The present invention will now be described by way of Examples below, but the present invention is not limited to the Examples.

In the following Examples, the bulk specific gravity, the melt flow rate, the amount of decane-soluble (insoluble) component, the molecular weight distribution, the final melting point, the melting point, the crystallization temperature, and the amount of heat of fusion of propylene polymers were measured by the following methods.

(1) Bulk specific gravity:

The bulk specific gravity was measured in accordance with JIS K-6721.

(2) Melt flow rate (MFR):

In accordance with ASTM D1238E, the measurement temperature for a propylene polymer was set at 230°C.

(3) Amount of decane-soluble (insoluble) component:

About 3 g of a propylene polymer (It was measured to a unit of $10^{-4}$ g, and this weight was denoted as b (g) in the following equation), 500 ml of decane, and a small amount of a heat-resistant stabilizer soluble in decane were added in a glass measurement vessel, and the propylene polymer was dissolved by being heated to 150°C over 2 hours while being stirred with a stirrer in a nitrogen atmosphere, then maintained at 150°C for 2 hours, and gradually cooled to 23°C over 8 hours. The resulting liquid containing precipitates of the propylene polymer was subjected to filtration under reduced pressure through a 25G-4 standard glass filter manufactured by Iwata Garasu Corporation. Then, 100 ml of the filtrate was harvested and dried under reduced pressure to give a portion of a decane-soluble component, and the weight thereof was weighed to a unit of $10^{-4}$ g (this weight was denoted as a (g) in the following equation). After this operation, the amount of the decane-soluble component was determined by the following equation.

$$\text{Decane-soluble component content} = 100 \times (500 \times a) / (100 \times b)$$

$$\text{Decane-insoluble component content} = 100 - 100 \times (500 \times a) / (100 \times b)$$

(4) Molecular weight distribution:

Gel permeation chromatograph: HLC-8321 GPC/HT model manufactured by Tosoh Corporation
Detector: Differential refractometer
Column: TSKgel GMH6-HT × 2 and TSKgel GMH6-HTL × 2 manufactured by Tosoh Corporation were serially connected.
Mobile phase medium: o-Dichlorobenzene
Flow rate: 1.0 ml/min
Measurement temperature: 140°C
Method of creating calibration curve: Standard polystyrene sample was used.
Sample concentration: 0.1% (w/w)
Amount of sample solution: 0.4 ml

Measurement was performed under the above conditions, and the resulting chromatogram was analyzed by a known method to calculate the weight average molecular weight (Mw), the number average molecular weight (Mn),

the Z average molecular weight (Mz), and the Mw/Mn value and the Mz/Mw value that are indices of the molecular weight distribution (MWD). The measurement time per sample was 60 min.

(5) Melting point (Tm) of polymer:

The melting point (Tm), the crystallization temperature (Tc), and the amount of heat of fusion (ΔH) of polymers in the present invention were measured with a differential scanning calorimeter (DSC) in a DSC220C apparatus manufactured by Seiko Instruments Inc. First, 3 to 10 mg of a sample was sealed into an aluminum pan and heated from room temperature to 200°C at 100°C/min. The sample was retained at 200°C for 5 min, and then cooled to 30°C at 10°C/min. The peak temperature observed in this cooling test was regarded as the crystallization temperature (Tc), and the amount of produced heat specified by the area of the peak was regarded as ΔH (1st-cool). Subsequently, the sample was left to stand for 5 min at 30°C, and then heated for the second time to 200°C at 10°C/min. The peak temperature observed in this second heating test was regarded as the melting point (Tm) (when multiple peaks were observed, two points on the high temperature side were listed in the table).

Also, the amount of absorbed heat specified by the area of the peak observed in the second heating test step was regarded as ΔH (ΔH (2nd-heat)). Moreover, the result of the peak area of ΔH (2nd-heat) was calculated in a divided manner in three temperature ranges of "lower than 160°C", "160°C or higher and 165°C or lower", and "higher than 165°C", and the proportions of the respective areas were regarded as ΔH (low), ΔH (mid), and ΔH (high) (the sum of ΔH(low), ΔH(mid), and ΔH (high) being 100%).

Herein, for convenience, all measured values relating to ΔH are absolute values (positive values).

The final melting point (Tmf) of polymers in the present invention was measured with a differential scanning calorimeter (DSC) in a DSC220C apparatus manufactured by Seiko Instruments Inc. First, 3 to 10 mg of a sample was sealed into an aluminum pan, and heated from room temperature to 240°C at 80°C/min. The sample was retained at 240°C for 1 minute and then cooled to 0°C at 80°C/min. After being retained at 0°C for 1 minute, the sample was heated to 150°C at 80°C/min and retained at 150°C for 5 min. Finally, the sample was heated to 180°C at 1.35°C/min, and the intersection between the baseline and the tangent of the inflection point on the high temperature side of the peak obtained in this final heating test was regarded as the final melting point (Tmf).

Tmf can be considered as one parameter for evaluating the crystal structure of a component exhibiting extremely high stereoregularity, and the ease of crystallization and the crystal structure, for example, of a polymer in the ultra-high molecular weight region, which is regarded as having a tendency of being unlikely to crystallize. More specifically, it can be considered that, as this Tmf value is higher, the ultra-high molecular weight polymer component is more likely to form crystals that has high heat resistance.

Some structural formulae of compounds used in the following Examples and Comparative Examples have stereoisomeric structures. The structural formulae showing stereoisomers of the exemplified compounds show the major isomers of the compounds used in the Examples and Comparative Examples. In the present invention, the main component refers to a component accounting for more than 50 mol%, and preferably 70 mol% or more.

[Example 1] (Example 1-1, Example 1-2)

<Preparation of solid titanium catalyst component [α1] >

After a 1-liter glass vessel was sufficiently purged with nitrogen, 85.8 g of anhydrous magnesium chloride, 321 g of decane, and 352 g of 2-ethylhexyl alcohol were placed therein, and subjected to a heating reaction at 130°C for 3 hours to give a homogeneous solution. Then, 241 g of this solution and 6.43 g of ethyl benzoate were added to the glass vessel, and mixed under stirring at 50°C for 1 hour.

After the homogeneous solution thus obtained was cooled to room temperature, the entirety of 38.3 ml of the homogeneous solution was added dropwise over 45 min to 100 ml of titanium tetrachloride retained at -20°C while being stirred at a revolution speed of 350 rpm. After completion of adding, the temperature of the mixed liquid was raised to 80°C over 3.8 hours, and when the temperature reached 80°C, 1.26 g of the following compound 1 was added to the mixed liquid. The temperature was again raised to 120°C over 40 min, and the mixture was retained at the same temperature for 35 min while being stirred. After the reaction was complete, the solid portion was recovered by hot filtration, resuspended in 100 ml of titanium tetrachloride, and again thermally reacted at 120°C for 35 min. After the reaction was complete, the solid portion was recovered again by hot filtration and thoroughly washed with decane at 100°C and decane at room temperature until no free titanium compound was detected in the washing liquid. The solid titanium catalyst component [α1] prepared by the above operations was preserved as a decane slurry, and a part of the slurry was dried to check the catalyst composition. The composition of the solid titanium catalyst component [α1] thus obtained had 0.28 mass% titanium, 1.5 mass% magnesium, and 0.13 mass% 2-ethylhexyl alcohol residues.

[Formula 15]

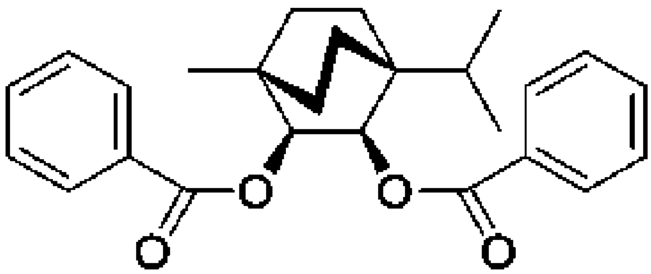

(Compound 1)

<Polymerization>

After 500 g of propylene and 1 NL of hydrogen at room temperature were added to a polymerization apparatus having an inner volume of 2 liters, a mixed liquid formed by mixing 7 ml of heptane, 0.35 mmol of triethyl aluminum, 0.07 mmol of cyclohexylmethyldimethoxysilane, and 0.0028 mmol (in terms of titanium atom) of the solid titanium catalyst component [α1] at 25°C for 10 min was added, and the temperature inside the polymerization apparatus was promptly raised to 70°C. After polymerization at 70°C for 1.5 hours, the reaction was terminated by a small amount of methanol, and propylene was purged. Moreover, the resulting polymer particles were dried under reduced pressure at 80°C overnight. Table 1 shows, for example, activity, bulk specific gravity, MFR, amount of decane-insoluble component, Tm, Tmf, and MWD (Example 1-1).

Polymerization was also performed in the same manner as above except that 5 NL of hydrogen was used (Example 1-2). The results are shown in Table 1.

[Example 2] (Example 2-1, Example 2-2)

<Preparation of solid titanium catalyst component [α2]>

A solid titanium catalyst component [α2] was obtained in the same manner as Example 1, except that 1.50 g of the following compound 2 was used in place of 1.26 g of the compound 1.

[Formula 16]

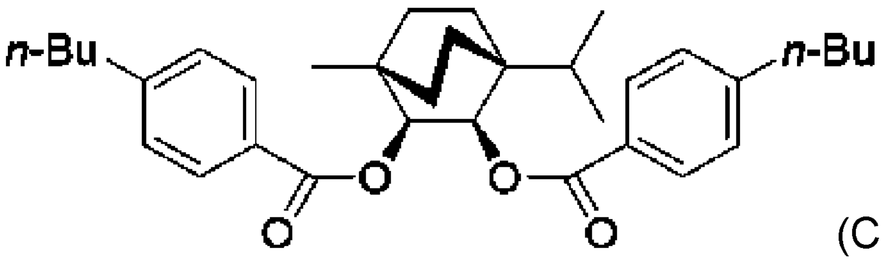

(Compound 2)

<Polymerization>

Polymerization of propylene was performed in the same manner as Example 1, except that 0.0024 mmol (in terms of titanium atom) of the solid titanium catalyst component [α2] was used in place of the solid titanium catalyst component [α1], the amount of triethylaluminum used was changed from 0.35 mmol to 0.3 mmol, and the amount of cyclohexylmethyldimethoxysilane used was changed from 0.07 mmol to 0.06 mmol (Example 2-1). Polymerization was also performed in the same manner as above except that 5 NL of hydrogen was used (Example 2-2). The results thereof are shown in Table 1.

[Example 3] (Example 3-1, Example 3-2)

<Preparation of solid titanium catalyst component [α3]>

A solid titanium catalyst component [α3] was obtained in the same manner as Example 1, except that 1.25 g of the following compound 3 was used in place of 1.26 g of the compound 1.

[Formula 17]

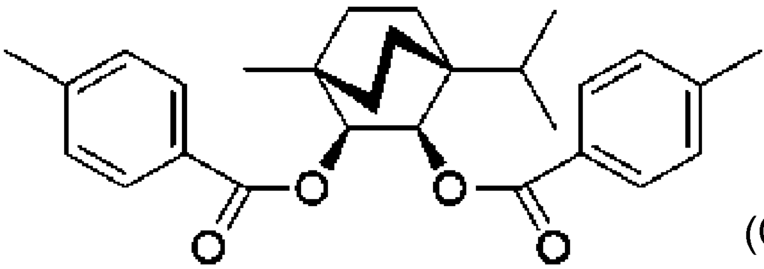

(Compound 3)

Polymerization of propylene was performed in the same manner as Example 1, except that the solid titanium catalyst component [α3] was used in place of the solid titanium catalyst component [α1] (Example 3-1). Polymerization was also performed in the same manner as above except that 5 NL of hydrogen was used (Example 3-2). The results thereof are shown in Table 1.

[Example 4] (Example 4-1, Example 4-2)

<Preparation of solid titanium catalyst component [α4]>

A solid titanium catalyst component [α4] was obtained in the same manner as Example 1, except that 1.42 g of the following compound 4 was used in place of 1.26 g of the compound 1.

[Formula 18]

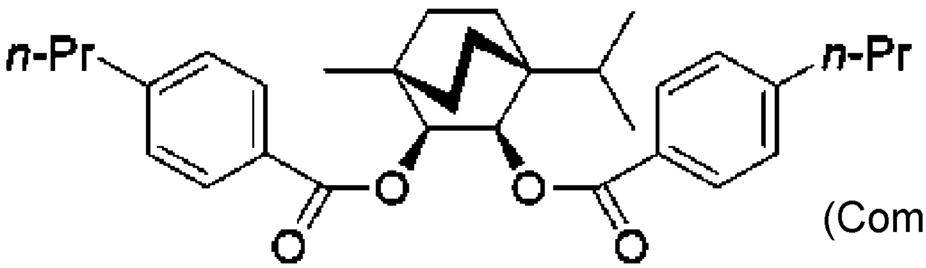

(Compound 4)

Polymerization of propylene was performed in the same manner as Example 1, except that the solid titanium catalyst component [α4] was used in place of the solid titanium catalyst component [α1] (Example 4-1). Polymerization was also performed in the same manner as above except that 5 NL of hydrogen was used (Example 4-2). The results thereof are shown in Table 1.

[Example 5] (Example 5-1, Example 5-2)

<Preparation of solid titanium catalyst component [α5]>

A solid titanium catalyst component [α5] was obtained in the same manner as Example 1, except that 1.17 g of the following compound 5 was used in place of 1.26 g of the compound 1.

[Formula 19]

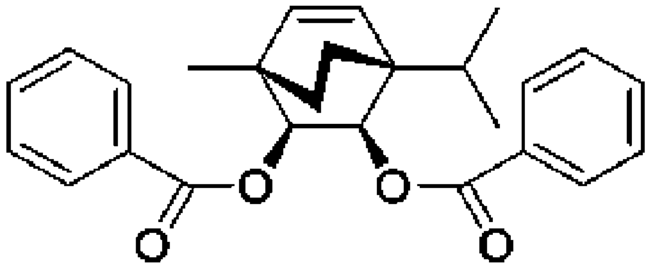

(Compound 5)

Polymerization of propylene was performed in the same manner as Example 1, except that the solid titanium catalyst component [α5] was used in place of the solid titanium catalyst component [α1] (Example 5-1). Polymerization was also performed in the same manner as above except that 5 NL of hydrogen was used (Example 5-2). The results thereof are shown in Table 1.

[Example 6] (Example 6-1, Example 6-2)

<Preparation of solid titanium catalyst component [α6]>

A solid titanium catalyst component [α6] was obtained in the same manner as Example 1, except that 1.01 g of the following compound 6 was used in place of 1.26 g of the compound 1.

[Formula 20]

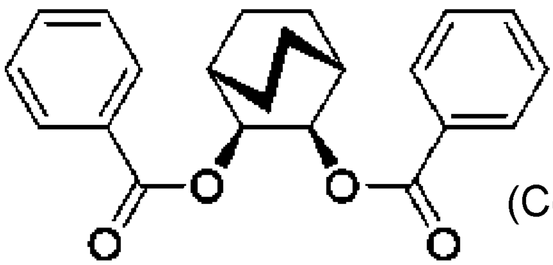

(Compound 6)

Polymerization of propylene was performed in the same manner as Example 1, except that the solid titanium catalyst component [α6] was used in place of the solid titanium catalyst component [α1] (Example 6-1). Polymerization was also performed in the same manner as above except that 5 NL of hydrogen was used (Example 6-2). The results thereof are shown in Table 1.

[Example 7] (Example 7-1, Example 7-2)

<Preparation of solid titanium catalyst component [α7]>

A solid titanium catalyst component [α7] was obtained in the same manner as Example 1, except that 1.00 g of the following compound 7 was used in place of 1.26 g of the compound 1.

[Formula 21]

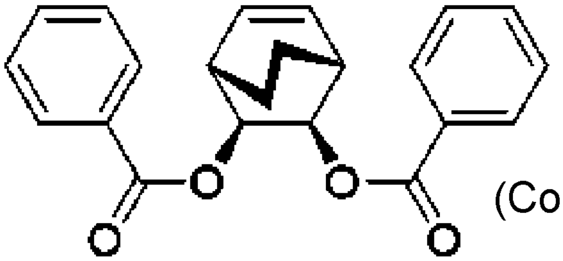

(Compound 7)

<Polymerization>

Polymerization of propylene was performed in the same manner as Example 1, except that 0.0032 mmol (in terms of titanium atom) of the solid titanium catalyst component [α7] was used in place of the solid titanium catalyst component [α1], the amount of triethylaluminum used was changed from 0.35 mmol to 0.4 mmol, and the amount of cyclohexylmethyldimethoxysilane used was changed from 0.07 mmol to 0.08 mmol (Example 7-1). Polymerization was also performed in the same manner as above except that 5 NL of hydrogen was used (Example 7-2). The results thereof are shown in Table 1.

[Example 8] (Example 8-1, Example 8-2)

<Preparation of solid titanium catalyst component [α8]>

A solid titanium catalyst component [α8] was obtained in the same manner as Example 1, except that 1.5 g of the following compound 8 was used in place of 1.26 g of the compound 1.

[Formula 22]

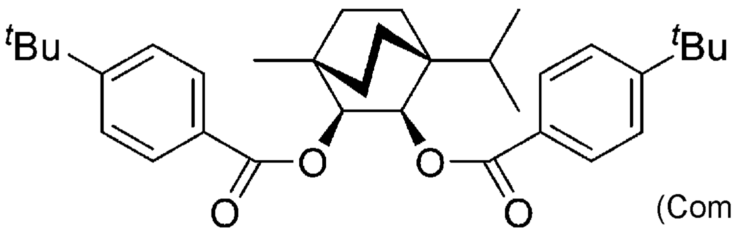

(Compound 8)

<Polymerization>

Polymerization of propylene was performed in the same manner as Example 1, except that the solid titanium catalyst component [a8] was used in place of the solid titanium catalyst component [α1] (Example 8-1). Polymerization was also performed in the same manner as above except that 5 NL of hydrogen was used (Example 8-2). The results are shown in Table 1.

[Example 9] (Example 9-1, Example 9-2, Example 9-3)

<Preparation of solid titanium catalyst component [α9]>

A solid titanium catalyst component [α9] was obtained in the same manner as Example 1, except that 1.35 g of the following compound 9 was used in place of 1.26 g of the compound 1.

[Formula 23]

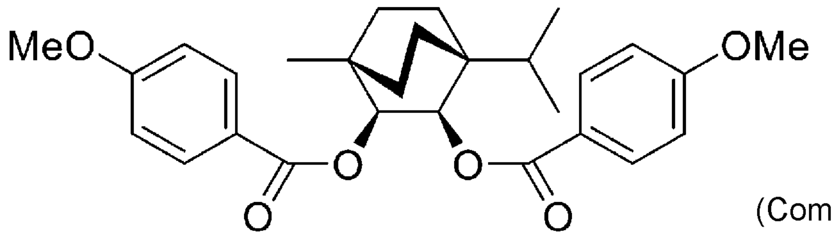

(Compound 9)

<Polymerization>

Polymerization of propylene was performed in the same manner as Example 1, except that the solid titanium catalyst component [α9] was used in place of the solid titanium catalyst component [α1] (Example 9-1). Polymerization was also performed in the same manner as above except that 5 NL of hydrogen was used (Example 9-2). Moreover, polymerization of propylene also was performed in the same manner as Example 9-1, except that the amount of the solid titanium catalyst component [α9] used was changed from 0.0028 mmol (in terms of titanium atom) to 0.0020 mmol (in terms of titanium atom), the amount of triethylaluminum used was changed from 0.35 mmol to 0.25 mmol, and cyclohexylmethyldimethoxysilane was not used (Example 9-3). The results thereof are shown in Table 1.

[Example 10] (Example 10-1, Example 10-2)

<Preparation of solid titanium catalyst component [α10]>

After a 1-liter glass vessel was sufficiently purged with nitrogen, 85.8 g of anhydrous magnesium chloride, 321 g of decane, and 352 g of 2-ethylhexyl alcohol were placed therein, and subjected to a heating reaction at 130°C for 3 hours to give a homogeneous solution. Then, 241 g of this solution and 6.43 g of ethyl benzoate were added to the glass vessel, and mixed under stirring at 50°C for 1 hour.

After the homogeneous solution thus obtained was cooled to room temperature, the entirety of 30.7 ml of the homogeneous solution was added dropwise to 80 ml of titanium tetrachloride retained at -20°C over 45 min while being stirred at a revolution speed of 350 rpm. After completion of adding, the temperature of the mixed liquid was raised to 80°C over 3.8 hours, and when the temperature reached 80°C, 1.07 g of the following compound 10 was added to the mixed liquid. The temperature was again raised to 120°C over 40 min, and the mixture was retained at the same temperature for 35 min while being stirred. After the reaction was complete, the solid portion was recovered by hot filtration, resuspended in 80 ml of titanium tetrachloride, and again thermally reacted at 120°C for 35 min. After the reaction was complete, the solid portion was recovered again by hot filtration and thoroughly washed with decane at 100°C and decane at room temperature until no free titanium compound was detected in the washing liquid. The solid titanium catalyst component [α10] prepared by the above operations was preserved as a decane slurry.

[Formula 24]

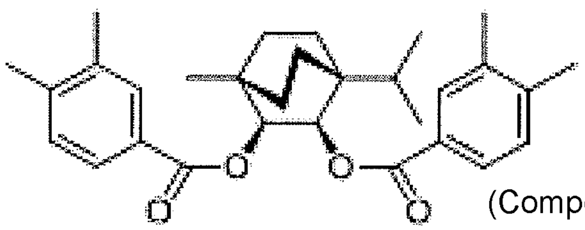

(Compound 10)

<Polymerization>

Polymerization of propylene was performed in the same manner as Example 1, except that 0.0020 mmol (in

terms of titanium atom) of the solid titanium catalyst component [α10] was used in place of the solid titanium catalyst component [α1], the amount of triethylaluminum used was changed from 0.35 mmol to 0.25 mmol, and the amount of cyclohexylmethyldimethoxysilane used was changed from 0.07 mmol to 0.05 mmol (Example 10-1). Polymerization of propylene also was performed in the same manner as Example 10-1, except that the solid titanium catalyst component [α10] was changed from 0.0020 mmol (in terms of titanium atom) to 0.0028 mmol (in terms of titanium atom), the amount of triethylaluminum used was changed from 0.25 mmol to 0.35 mmol, the amount of cyclohexylmethyldimethoxysilane used was changed from 0.05 mmol to 0.07 mmol, and the amount of hydrogen used was changed from 1 NL to 5 NL (Example 10-2). The results thereof are shown in Table 1.

[Example 11] (Example 11-1)

<Preparation of solid titanium catalyst component [α11]>

A solid titanium catalyst component [α11] was obtained in the same manner as Example 1, except that 1.48 g of the following compound 11 was used in place of 1.26 g of the compound 1.

[Formula 25]

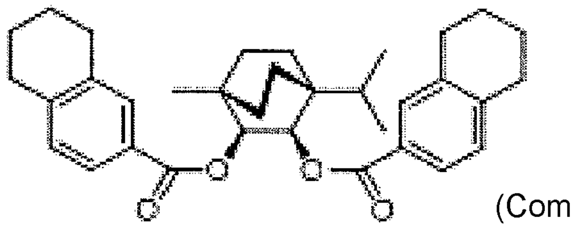

(Compound 11)

<Polymerization>

Polymerization of propylene was performed in the same manner as Example 1, except that 0.0020 mmol (in terms of titanium atom) of the solid titanium catalyst component [α11] was used in place of the solid titanium catalyst component [α1], the amount of triethylaluminum used was changed from 0.35 mmol to 0.25 mmol, and the amount of cyclohexylmethyldimethoxysilane used was changed from 0.07 mmol to 0.05 mmol (Example 11-1). The results are shown in Table 1.

[Comparative Example 1]

<Preparation of solid titanium catalyst component [β1]>

A solid titanium catalyst component [β1] was obtained in the same manner as Example 1, except that 1.64 g of the following compound-c1 was used in place of 1.26 g of the compound 1.

[Formula 26]

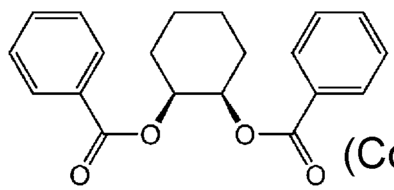

(Compound-c1)

<Polymerization>

Polymerization of propylene was performed in the same manner as Example 1, except that 0.0032 mmol (in terms of titanium atom) of the solid titanium catalyst component [β1] was used in place of the solid titanium catalyst

component [α1], the amount of triethylaluminum used was changed from 0.35 mmol to 0.4 mmol, and the amount of cyclohexylmethyldimethoxysilane used was changed from 0.07 mmol to 0.08 mmol. The results are shown in Table 1.

[Comparative Example 2]

<Preparation of solid titanium catalyst component [β2]>

A solid titanium catalyst component [β2] was obtained in the same manner as Example 1, except that 1.64 g of the following compound-c2 was used in place of 1.26 g of the compound 1.

[Formula 27]

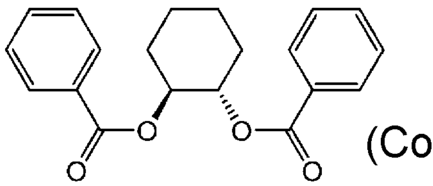

(Compound-c2)

<Polymerization>

Polymerization of propylene was performed in the same manner as Example 1, except that 0.0032 mmol (in terms of titanium atom) of the solid titanium catalyst component [β1] was used in place of the solid titanium catalyst component [α1], the amount of triethylaluminum used was changed from 0.35 mmol to 0.4 mmol, and the amount of cyclohexylmethyldimethoxysilane used was changed from 0.07 mmol to 0.08 mmol. The results are shown in Table 1.

[Table 1]

| Experiment No. | Activity (Kg-PP/g-Cat) | Bulk specific gravity (g/ml) | MFR (g/10 min) | Amount of decane-soluble component (%) |
|---|---|---|---|---|
| Ex. 1-1 | 57.1 | 0.48 | 4.4 | 1.30 |
| Ex. 1-2 | 66.7 | 0.48 | 102.0 | 1.68 |
| Ex. 2-1 | 88.9 | 0.48 | 4.0 | 1.02 |
| Ex. 2-2 | 88.9 | 0.47 | 118.7 | 1.33 |
| Ex. 3-1 | 64.0 | 0.50 | 4.7 | 1.57 |
| Ex. 3-2 | 69.6 | 0.49 | 104.2 | 1.98 |
| Ex. 4-1 | 84.2 | 0.49 | 3.7 | 1.13 |
| Ex. 4-2 | 88.9 | 0.48 | 107.9 | 1.48 |
| Ex. 5-1 | 51.6 | 0.48 | 4.4 | 2.72 |
| Ex. 5-2 | 61.5 | 0.48 | 71.2 | 2.48 |
| Ex. 6-1 | 25.0 | 0.49 | 0.8 | 2.20 |
| Ex. 6-2 | 28.8 | 0.49 | 19.6 | 2.58 |
| Ex. 7-1 | 28.3 | 0.49 | 0.9 | 2.14 |
| Ex. 7-2 | 29.3 | 0.49 | 26.3 | 2.30 |
| Ex. 8-1 | 71.4 | 0.48 | 2.2 | 0.95 |
| Ex. 8-2 | 71.4 | 0.47 | 82.0 | 1.32 |
| Ex. 9-1 | 80.0 | 0.49 | 4.1 | 1.52 |

(continued)

| Experiment No. | Activity (Kg-PP/g-Cat) | | Bulk specific gravity (g/ml) | | MFR (g/10 min) | | Amount of decane-soluble component (%) |
|---|---|---|---|---|---|---|---|
| Ex. 9-2 | 72.7 | | 0.49 | | 107.7 | | 1.93 |
| Ex. 9-3 | 94.1 | | 0.46 | | 21.6 | | 9.86 |
| Ex. 10-1 | 61.5 | | 0.49 | | 3.8 | | 1.15 |
| Ex. 10-2 | 69.6 | | 0.49 | | 81.9 | | 1.45 |
| Ex. 11-1 | 71.4 | | 0.49 | | 6.3 | | 1.16 |
| Comp. Ex. 1 | 9.0 | | 0.46 | | 10.6 | | 6.63 |
| Comp. Ex. 2 | 6.8 | | Not measurable | | 6.9 | | 5.97 |
| Experiment No. | Mw | Mw/Mn | Mz/Mw | Tmf (°C) | Tm (°C) | Tm* (°C) | Tc (°C) |
| Ex. 1-1 | 424,000 | 8.86 | 7.41 | 171.3 | 161.9 | - | 113.5 |
| Ex. 1-2 | 145,000 | 6.63 | 5.03 | 170.0 | 159.6 | 146.3 | 113.1 |
| Ex. 2-1 | 403,000 | 8.19 | 5.83 | 172.1 | 162.2 | 147.0 | 112.9 |
| Ex. 2-2 | 140,000 | 6.12 | 5.31 | 169.6 | 160.3 | 154.1 | 113.2 |
| Ex. 3-1 | 394,000 | 8.23 | 6.48 | 171.1 | 161.3 | 154.2 | 113.3 |
| Ex. 3-2 | 160,000 | 7.10 | 7.44 | 169.6 | 160.0 | 153.3 | 113.5 |
| Ex. 4-1 | 404,000 | 7.49 | 5.07 | 171.5 | 161.9 | 154.0 | 113.3 |
| Ex. 4-2 | 148,000 | 5.98 | 6.28 | 169.8 | 160.4 | 153.5 | 113.5 |
| Ex. 5-1 | 398,000 | 8.35 | 6.00 | 171.4 | 161.2 | - | 113.3 |
| Ex. 5-2 | 158,000 | 6.84 | 4.38 | 170.0 | 159.5 | - | 112.7 |
| Ex. 6-1 | 725,000 | 14.67 | 5.91 | 171.4 | 162.1 | - | 114.3 |
| Ex. 6-2 | 284,000 | 9.73 | 8.09 | 170.9 | 160.4 | 146.1 | 113.8 |
| Ex. 7-1 | 683,000 | 11.89 | 5.97 | 171.4 | 162.3 | - | 115.1 |
| Ex. 7-2 | 284,000 | 9.69 | 12.79 | 170.5 | 160.4 | 146.0 | 113.5 |
| Ex. 8-1 | 489,000 | 9.29 | 5.27 | 171.9 | 162.6 | 154.6 | 113.1 |
| Ex. 8-2 | 165,000 | 6.60 | 5.25 | 170.2 | 160.4 | 153.6 | 113.7 |
| Ex. 9-1 | 378,000 | 6.22 | 5.24 | 171.9 | 161.7 | 146.7 | 112.5 |
| Ex. 9-2 | 144,000 | 5.92 | 6.17 | 170.0 | 164.0 | 159.4 | 113.1 |
| Ex. 9-3 | 256,000 | 5.96 | 4.63 | 169.5 | 161.7 | - | 112.6 |
| Ex. 10-1 | 408,000 | 7.80 | 5.03 | 171.3 | 161.6 | 153.4 | 113.2 |
| Ex. 10-2 | 158,000 | 6.11 | 4.46 | 169.5 | 166.4 | 159.9 | 114.5 |
| Ex. 11-1 | 353,000 | 7.97 | 5.32 | 170.7 | 161.2 | 153.2 | 112.1 |
| Comp. Ex. 1 | 292,000 | 8.35 | 5.67 | 169.8 | 164.5 | 158.0 | 111.7 |
| Comp. Ex. 2 | 339,000 | 9.17 | 6.24 | 169.8 | 164.9 | 159.0 | 113.3 |
| *Data obtained when two melting points were detected in DSC measurement | | | | | | | |

(continued)

| Experiment No. | ΔH (1st-cool) (J/g) | ΔH (2nd-heat) (J/g) | $\Delta H_{high}$ | $\Delta H_{mid}$ | $\Delta H_{low}$ |
|---|---|---|---|---|---|
| Ex. 1-1 | 91.4 | 85.8 | 14.36 | 37.26 | 48.38 |
| Ex. 1-2 | 103.2 | 108.4 | 11.44 | 30.24 | 58.32 |
| Ex. 2-1 | 97.5 | 83.4 | 22.96 | 43.74 | 33.30 |
| Ex. 2-2 | 102.1 | 106.7 | 14.69 | 33.43 | 51.88 |
| Ex. 3-1 | 96.3 | 86.2 | 17.03 | 41.29 | 41.68 |
| Ex. 3-2 | 102.5 | 97.3 | 12.50 | 33.42 | 54.08 |
| Ex. 4-1 | 99.3 | 92.3 | 20.09 | 37.33 | 42.58 |
| Ex. 4-2 | 103.4 | 102.2 | 14.48 | 33.13 | 52.39 |
| Ex. 5-1 | 83.0 | 79.2 | 13.31 | 39.35 | 47.34 |
| Ex. 5-2 | 101.3 | 87.7 | 15.32 | 34.07 | 50.61 |
| Ex. 6-1 | 97.7 | 84.5 | 12.58 | 45.00 | 42.42 |
| Ex. 6-2 | 101.0 | 93.4 | 13.76 | 38.08 | 48.16 |
| Ex. 7-1 | 97.2 | 83.7 | 14.65 | 46.12 | 39.23 |
| Ex. 7-2 | 99.8 | 98.5 | 14.24 | 36.07 | 49.69 |
| Ex. 8-1 | 98.2 | 91.9 | 22.36 | 39.09 | 38.55 |
| Ex. 8-2 | 104.1 | 105.9 | 14.46 | 31.85 | 53.69 |
| Ex. 9-1 | 97.3 | 88.6 | 20.03 | 40.79 | 39.18 |
| Ex. 9-2 | 102.1 | 110.4 | 11.23 | 28.11 | 60.66 |
| Ex. 9-3 | 97.3 | 88.6 | 7.04 | 27.48 | 65.48 |
| Ex. 10-1 | 97.4 | 99.8 | 19.64 | 29.06 | 51.30 |
| Ex. 10-2 | 99.4 | 104.6 | 13.55 | 19.67 | 66.78 |
| Ex. 11-1 | 96.2 | 97.0 | 20.90 | 28.42 | 50.68 |
| Comp. Ex. 1 | 76.3 | 66.9 | 8.37 | 31.61 | 60.02 |
| Comp. Ex. 2 | 82.0 | 70.0 | 7.35 | 32.62 | 60.03 |

It can be understood from the comparison of the results shown in the Examples and Comparative Examples that propylene polymers having high Tmf and ΔH can be obtained in a highly active manner by polymerizing propylene using the solid titanium catalyst component of the present invention.

Principal experimental results concerning polymers with an MFR of 10 or more are summarized in Table 2, principal experimental results concerning polymers having an MFR less than 10 are summarized in Table 3, and principal experimental results concerning polymers having a decane-soluble component content of 5 mass% or more are summarized in Table 4. It can be understood from these results that the propylene polymers of the present invention are unique polymers mainly specified by their characteristics concerning the heat of fusion in a region of 165°C or higher. These polymers can be suitably used in various applications by taking advantage of the properties thereof.

[Table 2]

| | Activity (Kg-PP/g-Cat) | Bulk specific gravity (g/ml) | | MFR (g/ 10 min) | Amount of decane-soluble component (%) | | |
|---|---|---|---|---|---|---|---|
| Ex. 1-2 | 66.7 | 0.48 | | 102.0 | 1.68 | | |
| Ex. 2-2 | 88.9 | 0.47 | | 118.7 | 1.33 | | |
| Ex. 3-2 | 69.6 | 0.49 | | 104.2 | 1.98 | | |
| Ex. 4-2 | 88.9 | 0.48 | | 107.9 | 1.48 | | |
| Ex. 5-2 | 61.5 | 0.48 | | 71.2 | 2.48 | | |
| Ex. 6-2 | 28.8 | 0.49 | | 19.6 | 2.58 | | |
| Ex. 7-2 | 29.3 | 0.49 | | 26.3 | 2.30 | | |
| Ex. 8-2 | 71.4 | 0.47 | | 82.0 | 1.32 | | |
| Ex. 9-2 | 72.7 | 0.49 | | 107.7 | 1.93 | | |
| Comp. Ex. 1 | 9.0 | 0.46 | | 10.6 | 6.63 | | |
| | Mw | Mw/Mn | Mz/Mw | Tmf (°C) | Tm (°C) | Tm* (°C) | Tc (°C) |
| Ex. 1-2 | 145,000 | 6.63 | 5.03 | 170.0 | 159.6 | 146.3 | 113.1 |
| Ex. 2-2 | 140,000 | 6.12 | 5.31 | 169.6 | 160.3 | 154.1 | 113.2 |
| Ex. 3-2 | 160,000 | 7.10 | 7.44 | 169.6 | 160.0 | 153.3 | 113.5 |
| Ex. 4-2 | 148,000 | 5.98 | 6.28 | 169.8 | 160.4 | 153.5 | 113.5 |
| Ex. 5-2 | 158,000 | 6.84 | 4.38 | 170.0 | 159.5 | - | 112.7 |
| Ex. 6-2 | 284,000 | 9.73 | 8.09 | 170.9 | 160.4 | 146.1 | 113.8 |
| Ex. 7-2 | 284,000 | 9.69 | 12.79 | 170.5 | 160.4 | 146.0 | 113.5 |
| Ex. 8-2 | 165,000 | 6.60 | 5.25 | 170.2 | 160.4 | 153.6 | 113.7 |
| Ex. 9-2 | 144,000 | 5.92 | 6.17 | 170.0 | 164.0 | 159.4 | 113.1 |
| Comp. Ex. 1 | 292,000 | 8.35 | 5.67 | 169.8 | 164.5 | 158.0 | 111.7 |
| | $\Delta H$ (1st-cool) (J/g) | $\Delta H$ (2nd-heat) (J/g) | $\Delta H_{high}$ | $\Delta H_{mid}$ | $\Delta H_{low}$ | $\Delta H_{mid}$ / $\Delta H_{low}$ | $\Delta H_{high}$/ $\Delta H_{mid}$ |
| Ex. 1-2 | 103.2 | 108.4 | 11.44 | 30.24 | 58.32 | 0.52 | 0.38 |
| Ex. 2-2 | 102.1 | 106.7 | 14.69 | 33.43 | 51.88 | 0.64 | 0.44 |
| Ex. 3-2 | 102.5 | 97.3 | 12.50 | 33.42 | 54.08 | 0.62 | 0.37 |
| Ex. 4-2 | 103.4 | 102.2 | 14.48 | 33.13 | 52.39 | 0.63 | 0.44 |
| Ex. 5-2 | 101.3 | 87.7 | 15.32 | 34.07 | 50.61 | 0.67 | 0.45 |
| Ex. 6-2 | 101.0 | 93.4 | 13.76 | 38.08 | 48.16 | 0.79 | 0.36 |
| Ex. 7-2 | 99.8 | 98.5 | 14.24 | 36.07 | 49.69 | 0.73 | 0.39 |
| Ex. 8-2 | 104.1 | 105.9 | 14.46 | 31.85 | 53.69 | 0.59 | 0.45 |
| Ex. 9-2 | 102.1 | 110.4 | 11.23 | 28.11 | 60.66 | 0.46 | 0.40 |
| Comp. Ex. 1 | 76.3 | 66.9 | 8.37 | 31.61 | 60.02 | 0.53 | 0.26 |

[Table 3]

| | Activity (Kg-PP/g-Cat) | Bulk specific gravity (g/ml) | MFR (g/ 10 min) | Amount of decane-soluble component (%) |
|---|---|---|---|---|
| Ex. 2-1 | 88.9 | 0.48 | 4.0 | 1.02 |
| Ex. 4-1 | 84.2 | 0.49 | 3.7 | 1.13 |
| Ex. 8-1 | 71.4 | 0.48 | 2.2 | 0.95 |
| Ex. 9-1 | 80.0 | 0.49 | 4.1 | 1.52 |
| Ex. 10-1 | 61.5 | 0.49 | 3.8 | 1.15 |
| Ex. 11-1 | 71.4 | 0.49 | 6.3 | 1.16 |
| Comp. Ex. 2 | 6.8 | Not measurable | 6.9 | 5.97 |

| | Mw | Mw/Mn | Mz/Mw | Tmf (°C) | Tm (°C) | Tm* (°C) | Tc (°C) |
|---|---|---|---|---|---|---|---|
| Ex. 2-1 | 403,000 | 8.19 | 5.83 | 172.1 | 162.2 | 147.0 | 112.9 |
| Ex. 4-1 | 404,000 | 7.49 | 5.07 | 171.5 | 161.9 | 154.0 | 113.3 |
| Ex. 8-1 | 489,000 | 9.29 | 5.27 | 171.9 | 162.6 | 154.6 | 113.1 |
| Ex. 9-1 | 378,000 | 6.22 | 5.24 | 171.9 | 161.7 | 146.7 | 112.5 |
| Ex. 10-1 | 408,000 | 7.80 | 5.03 | 171.3 | 161.6 | 153.4 | 113.2 |
| Ex. 11-1 | 353,000 | 7.97 | 5.32 | 170.7 | 161.2 | 153.2 | 112.1 |
| Comp. Ex. 2 | 339,000 | 9.17 | 6.24 | 169.8 | 164.9 | 159.0 | 113.3 |

| | $\Delta H$ (1st-cool) (J/g) | $\Delta H$ (2nd-heat) (J/g) | $\Delta H_{high}$ | $\Delta H_{mild}$ | $\Delta H_{low}$ | Tmf-$\Delta H_{high}$ | $\Delta H_{high} + \Delta H_{mid}$ |
|---|---|---|---|---|---|---|---|
| Ex. 2-1 | 97.5 | 83.4 | 22.96 | 43.74 | 33.30 | 149.10 | 66.70 |
| Ex. 4-1 | 99.3 | 92.3 | 20.9 | 37.33 | 42.58 | 151.42 | 57.42 |
| Ex. 8-1 | 98.2 | 91.9 | 22.36 | 39.09 | 38.55 | 149.51 | 61.45 |
| Ex. 9-1 | 97.3 | 88.6 | 20.03 | 40.79 | 39.18 | 151.84 | 60.82 |
| Ex. 10-1 | 97.4 | 99.8 | 19.64 | 29.06 | 51.30 | 151.70 | 48.70 |
| Ex. 11-1 | 96.2 | 97.0 | 20.90 | 28.42 | 50.68 | 149.83 | 49.32 |
| Comp. Ex. 2 | 82.0 | 70.0 | 7.35 | 32.62 | 60.03 | 162.40 | 39.97 |

[Table 4]

| | Activity (Kg-PP/g-Cat) | Bulk specific gravity (g/ml) | MFR (g/10 min) | Amount of decane-soluble component (%) |
|---|---|---|---|---|
| Ex. 9-3 | 94.1 | 0.46 | 21.6 | 9.86 |

(continued)

| | Activity (Kg-PP/g-Cat) | Bulk specific gravity (g/ml) | MFR (g/10 min) | Amount of decane-soluble component (%) |
|---|---|---|---|---|
| Comp. Ex. 1 | 9.0 | 0.46 | 10.6 | 6.63 |
| Comp. Ex. 2 | 6.8 | Not measurable | 6.9 | 5.97 |

| | Mw | Mw/Mn | Mz/Mw | Tmf (° C) | Tm (° C) | Tm* (° C) | Tc (° C) |
|---|---|---|---|---|---|---|---|
| Ex. 9-3 | 256,000 | 5.96 | 4.63 | 169.5 | 161.7 | - | 112.6 |
| Comp. Ex. | 1 292,000 | 8.35 | 5.67 | 169.8 | 164.5 | 158.0 | 111.7 |
| Comp. Ex. 2 | 339,000 | 9.17 | 6.24 | 169.8 | 164.9 | 159.0 | 113.3 |

| | ΔH (1st-cool) (J/g) | ΔH (2nd-heat) (J/g) | $\Delta H_{high}$ | $AH_{mid}$ | $\Delta H_{low}$ |
|---|---|---|---|---|---|
| Ex. 9-3 | 97.3 | 88.6 | 7.04 | 27.48 | 65.48 |
| Comp. Ex. 1 | 76.3 | 66.9 | 8.37 | 31.61 | 60.02 |
| Comp. Ex. 2 | 82.0 | 70.0 | 7.35 | 32.62 | 60.03 |

*The above polymers are all propylene homopolymers, and it is thus obvious that, in the decane-insoluble component thereof, a structural unit derived from propylene = 100 mol%.

## Claims

**1.** A solid titanium catalyst component (I) comprising titanium, magnesium, halogen, and a cyclic multiple-ester-group-containing compound (a) represented by the following formula (1):

[Formula 1]

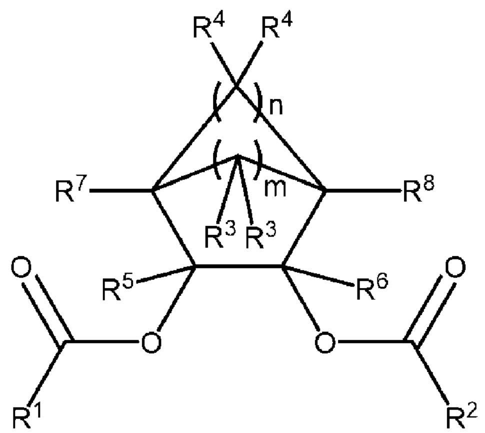

(1)

wherein m and n are each independently an integer of 1 to 5, with a relationship of m+x ≥ 4 being satisfied; $R^1$ and $R^2$ are each independently a substituted or unsubstituted hydrocarbon group having 1 to 20 carbon atoms; a plurality of $R^3$, a plurality of $R^4$, and $R^5$ to $R^8$ are each independently a group selected from a hydrogen atom,

a substituted or unsubstituted hydrocarbon group having 1 to 20 carbon atoms, or a halogen atom; a hydrogen atom, a carbon atom, or both, of $R^1$ to $R^8$ are optionally replaced by at least one atom selected from the group consisting of a nitrogen atom, an oxygen atom, a phosphorus atom, a halogen atom, and a silicon atom; two or more selected from $R^5$ to $R^8$ are optionally bonded to one another to form a monocyclic or

polycyclic ring, and adjacent substituents are optionally directly bonded to form a multiple bond; $R^3$ is optionally bonded to one or more selected from $R^4$ to $R^8$ to form a monocyclic or polycyclic ring, and adjacent substituents are optionally directly bonded to form a multiple bond; $R^3$ groups bonded to the same carbon are optionally bonded to one another to form a monocyclic or polycyclic ring; while $R^3$ groups bonded to different carbon atoms are in a mutually independent relationship, $R^3$ groups bonded to adjacent carbon atoms are optionally directly bonded to one another to form a multiple bond; $R^4$ is optionally bonded to one or more selected from $R^3$ and $R^5$ to $R^8$ to form a monocyclic or

polycyclic ring, and adjacent substituents are optionally directly bonded to form a multiple bond; $R^4$ groups bonded to the same carbon are optionally bonded to one another to form a monocyclic or polycyclic ring; and while $R^4$ groups bonded to different carbon atoms are in a mutually independent relationship, $R^4$ groups bonded to adjacent carbon atoms are optionally directly bonded to one another to form a multiple bond.

**2.** The solid titanium catalyst component (I) according to claim 1, wherein m is 2 or more, and n is 2 or more.

**3.** The solid titanium catalyst component (I) according to claim 1, wherein $R^3$ to $R^8$ are independent substituents.

**4.** The solid titanium catalyst component (I) according to claim 1, wherein $R^1$ and $R^2$ are each independently a substituted or unsubstituted alkyl group, a substituted or unsubstituted alkenyl group, a substituted or unsubstituted cycloalkyl group, a substituted or unsubstituted aryl group, or a substituted or unsubstituted heteroaryl group.

**5.** The solid titanium catalyst component (I) according to claim 1, wherein $R^3$ to $R^8$ are each independently a group selected from a hydrogen atom, a substituted or unsubstituted alkyl group, a substituted or unsubstituted alkenyl group, a substituted or unsubstituted cycloalkyl group, a substituted or unsubstituted cycloalkenyl group, a substituted or unsubstituted alkoxy group, a substituted or unsubstituted alkenyloxy group, a substituted or unsubstituted cycloalkyloxy group, a substituted or unsubstituted cycloalkenyloxy group, a substituted or unsubstituted aryl group, a substituted or unsubstituted aryloxy group, a substituted or unsubstituted heteroaryl group, or a substituted or unsubstituted heteroaryloxy group.

**6.** A catalyst for olefin polymerization, comprising: the solid titanium catalyst component (I) according to claim 1; and an organometallic compound catalyst component (II) comprising a metal element selected from Group 1, Group 2, and Group 13 of the periodic table.

**7.** The catalyst for olefin polymerization according to claim 6, further comprising an electron donor (III).

**8.** An olefin polymerization method, comprising polymerizing an olefin in the presence of the catalyst for olefin polymerization according to claim 6 or 7.

**9.** A propylene polymer satisfying the following requirements ($\alpha$H) to ($\delta$H):

$$(\alpha H)\ MFR \geq 10\ g/10\ min$$

$$(\beta H)\ \Delta H \geq 80\ J/g$$

$$(\gamma H)\ \Delta H\ (high) \geq 10\%$$

$$(\delta H)\ [\Delta H\ (mid) / \Delta H\ (low)] > [\Delta H\ (high) / \Delta H\ (mid)]$$

wherein definitions of characters in the requirements ($\alpha$H) to ($\delta$H) are as follows:

MFR: Melt flow rate (g/10 min) determined at 230°C under a load of 2.16 kg in accordance with ASTM 1238

standard;
ΔH: Amount of heat of fusion (J/g) measured by DSC method;
ΔH (high): Proportion % of amount of heat of fusion in region higher than 165°C in ΔH;
ΔH (mid): Proportion % of amount of heat of fusion in region of 160°C or higher and 165°C or lower in ΔH; and
ΔH (low): Proportion % of amount of heat of fusion in region lower than 160°C in ΔH;
provided that the sum of ΔH (high), ΔH (mid), and ΔH (low) is 100%.

**10.** The propylene polymer according to claim 9, further satisfying the following requirement (εH):

$$(\varepsilon H)\ \Delta H\ (low) < 61\%$$

**11.** A propylene polymer satisfying the following requirements (αL) to (δL):

$$(\alpha L)\ MFR < 10\ g/10\ min$$

$$(\beta L)\ \Delta H \geq 80\ J/g$$

$$(\gamma L)\ \Delta H\ (high) \geq 18.5\%,\ \Delta H\ (mid) \geq 28\%,\ and\ [\Delta H\ (high) + \Delta H\ (mid)] \leq 80\%$$

$$(\delta L)\ Tmf \geq 170.0°C$$

wherein definitions of characters in the requirements (αL) to (δL) are as follows:

MFR: Melt flow rate (g/10 min) determined at 230°C under a load of 2.16 kg in accordance with ASTM 1238 standard;
ΔH: Amount of heat of fusion (J/g) measured by DSC method;
ΔH (high): Proportion % of amount of heat of fusion in region higher than 165°C in ΔH;
ΔH (mid): Proportion % of amount of heat of fusion in region of 160°C or higher and 165°C or lower in ΔH; and
ΔH (low): Proportion % of amount of heat of fusion in region lower than 160°C in ΔH;
provided that the sum of ΔH (high), ΔH (mid), and ΔH (low) is 100%; and
Tmf: Final melting point °C determined by the following method with a differential scanning calorimeter (DSC) in a DSC220C apparatus manufactured by Seiko Instruments Inc.;
3 to 10 mg of a sample is sealed into an aluminum pan,
heated from room temperature to 240°C at a rate of 80°C/min,
retained at 240°C for 1 min,
cooled to 0°C at a rate of 80°C/min,
retained at 0°C for 1 min,
heated to 150°C at a rate of 80°C/min,
retained at 150°C for 5 min, and
heated to 180°C at a rate of 1.35°C/min to give a chart, and the temperature value of the intersection between the baseline and the tangent of the inflection point on the high temperature side of the peak appearing on the chart is regarded as the final melting point.

**12.** The propylene polymer according to claim 11, further satisfying the following requirement (εL):

$$(\varepsilon L)\ Tmf - \Delta H\ (high) \geq 149.0$$

**13.** A propylene polymer satisfying the following requirements (αS) to (εS):

$$(\alpha S)\ \text{Decane-soluble component content} \geq 5\%$$

$$(\beta S)\ \Delta H \geq 80\ J/g$$

$$(\gamma S)\ Tmf \geq 169°C$$

$$(\delta S)\ \Delta H\ (low) \geq 61\%,\ \text{and}\ 20\% \geq \Delta H\ (high) \geq 5\%$$

$$(\varepsilon S)\ \text{Content of structural unit derived from olefin other than propylene in decane-insoluble moiety} \leq 5\ mol\%$$

wherein definitions of characters in the requirements ($\alpha$S) to ($\varepsilon$S) are as follows:

ΔH: Amount of heat of fusion (J/g) measured by DSC method;
ΔH (high): Proportion % of amount of heat of fusion in region higher than 165°C in ΔH;
ΔH (mid): Proportion % of amount of heat of fusion in region of 160°C or higher and 165°C or lower in ΔH; and
ΔH (low): Proportion % of amount of heat of fusion in region lower than 160°C in ΔH;
provided that the sum of ΔH (high), ΔH (mid), and ΔH (low) is 100%; and
Tmf: Final melting point °C determined by the following method with a differential scanning calorimeter (DSC) in a DSC220C apparatus manufactured by Seiko Instruments Inc.;
3 to 10 mg of a sample is sealed into an aluminum pan,
heated from room temperature to 240°C at a rate of 80°C/min,
retained at 240°C for 1 min,
cooled to 0°C at a rate of 80°C/min,
retained at 0°C for 1 min,
heated to 150°C at a rate of 80°C/min,
retained at 150°C for 5 min, and
heated to 180°C at a rate of 1.35°C/min to give a chart, and the temperature value of the intersection between the baseline and the tangent of the inflection point on the high temperature side of the peak appearing on the chart is regarded as the final melting point.

[Fig. 1]

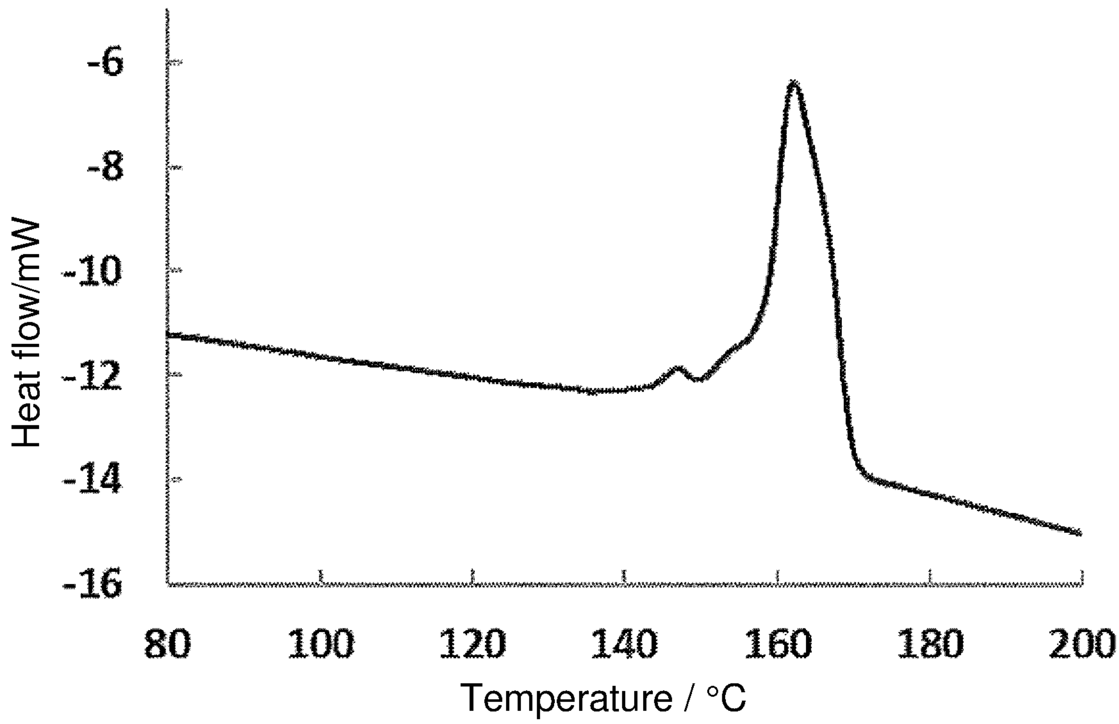


Figure DSC curve (during second heating) of Example 2-1

**INTERNATIONAL SEARCH REPORT**

International application No.
**PCT/JP2021/047302**

**A. CLASSIFICATION OF SUBJECT MATTER**

***C08F 4/654***(2006.01)i; ***C08F 10/00***(2006.01)i; ***C08F 10/06***(2006.01)i
FI: C08F4/654; C08F10/00 510; C08F10/06

According to International Patent Classification (IPC) or to both national classification and IPC

**B. FIELDS SEARCHED**

Minimum documentation searched (classification system followed by classification symbols)

C08F4/654; C08F10/00; C08F10/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 108250335 A (YINGKOU FENGGUANG ADVANCED MAT CO LTD) 06 July 2018 (2018-07-06)<br>entire text | 1-13 |
| A | CN 106905452 A (UNIV BEIJING CHEMICAL TECH) 30 June 2017 (2017-06-30)<br>entire text | 1-13 |
| A | JP 2015-140417 A (MITSUI CHEMICALS INC) 03 August 2015 (2015-08-03)<br>entire text | 1-13 |
| A | JP 2015-63678 A (SUNALLOMER LTD) 09 April 2015 (2015-04-09)<br>entire text | 1-13 |
| A | JP 2011-184686 A (SUNALLOMER LTD) 22 September 2011 (2011-09-22)<br>entire text | 1-13 |
| A | WO 2019/220994 A1 (KANEKA CORPORATION) 21 November 2019 (2019-11-21)<br>entire text | 1-13 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/047302**

| Patent document cited in search report | Publication date (day/month/year) | Patent family member(s) | Publication date (day/month/year) |
|---|---|---|---|
| CN 108250335 A | 06 July 2018 | (Family: none) | |
| CN 106905452 A | 30 June 2017 | (Family: none) | |
| JP 2015-140417 A | 03 August 2015 | (Family: none) | |
| JP 2015-63678 A | 09 April 2015 | (Family: none) | |
| JP 2011-184686 A | 22 September 2011 | (Family: none) | |
| WO 2019/220994 A1 | 21 November 2019 | EP 3795622 A1<br>whole document<br>CN 112189032 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 57063310 A
- JP 2005517746 A
- WO 2008010459 A
- WO 2006077945 A
- JP 2001354714 A
- EP 585869 A1
- EP 0585869 A
- WO 2004016662 A